(19) Europäisches Patentamt
European Patent Office
Office européen des brevets

(11) EP 1 900 636 A1

(12) **EUROPEAN PATENT APPLICATION**

(43) Date of publication:
**19.03.2008 Bulletin 2008/12**

(21) Application number: **06120795.7**

(22) Date of filing: **15.09.2006**

(51) Int Cl.:
*B64C 27/39* (2006.01)   *B63H 25/42* (2006.01)
*B63H 1/20* (2006.01)   *B63H 3/00* (2006.01)
*B63H 3/10* (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Yellowfin Limited**
**Lower York Street**
**Southampton,**
**Hampshire SO14 4QF (GB)**

(72) Inventor: **Duncan, Ian**
**Southampton, Hampshire SO13 4RT (GB)**

(74) Representative: **Smee, Anthony James Michael**
**Gill Jennings & Every LLP**
**Broadgate House**
**7 Eldon Street**
**London EC2M 7LH (GB)**

(54) **Marine propulsion and constructional details thereof**

(57)    A propeller comprising: a hub (101) and a plurality of fins (3) extending radially outwards from the hub, wherein each fin is moveably connected to hub such that, during rotation of the propeller, either the dihedral, the rake or both the dihedral and the rake of the fin can be altered and controlled by movement of the fin about one or more axes of rotation (BB).

Figure 1

EP 1 900 636 A1

**Description**

BACKGROUND TO THE INVENTION

The present invention relates to marine propulsion systems and to methods of providing controlled moments about the yaw, pitch and roll axes of a craft independently whilst also providing controlled thrust forces in the axial and transverse senses. The invention also covers a propeller, a fin or blade for a marine propulsion systems and to methods of providing dihedral control and folding, including mechanisms for controlling the pitch and dihedral (as defined below) of the fins on the propellers.

Whilst the inventions have particular application to propellers for boats and ships, they will have application to other propellers and lift-generating rotors.

PURPOSE OF THE INVENTION

The various aspects of the invention have one or more of the following principal objectives:

1. Hull trim control
The drag or resistance of high-speed hulls, and planing hulls in particular is very dependent on the hull trim angle. The optimum trim angle is particularly dependent on craft surge speed and displacement.
In the case of stepless 'V' hulls in particular, but generally for hull speed hulls, the centre of lift moves aft as the speed increases. Whilst the use of some form of dynamic ballasting such as water ballasting, may be used to vary the centre of gravity position to correct for relatively slow variations in the centre of gravity position, much faster response is required for effective craft trimming whilst accelerating or running in a seaway.
The first objective of the present invention is to provide effective forces and moments to enable effective static and dynamic craft trimming by means of thrust vectoring with minimal change to propulsive efficiency.

2. Turning
Turning a craft efficiently requires that the roll, trim and yaw angles are established and maintained such as optimise variables including hull drag or resistance, side-slip, and ride comfort.
A second objective of the present invention is to provide effective means of thrust vectoring to enable the roll, trim and yaw angles and rates of a craft to be independently set up and maintained such that these angles and angular rates may be optimised by a corresponding control system without recourse to rudders, trim tabs or like drag-creating control surfaces.
Optimisation of these variables results in minimal power loss in turns.

3. Improved docking & Low-speed control
Boats in general, but in particular lightweight planing craft show very poor directional stability at low speeds and helm-reaction is slow. Manoeuvring frequently requires operating the helm, clutching and throttling one or more engines and operating a bow thruster. Furthermore, all drives other than controllable pitch propellers and water jets have a minimum boat speed which is fixed by engine speed. For fast craft this minimum speed may be 8knots or even higher. Improved gearboxes have recently become available TwinDisc Patent Nos US4186829, US6443286, US6666312, Caterpillar Patent No 4125039 and Volvo Penta Patent No US5992599, ZF Patent No DE10035480. These rely on modulating the drive clutch and largely remove the minimum speed limitation.
Docking and low speed manoeuvring in confined spaces requires considerable tuition and practice and remains a time of high stress for pilots.
A third objective of the present invention is to enable low speed thrust vectoring such that the velocities and accelerations in the fore/aft, lateral and yaw directions may be independently controlled such as to enable dynamic positioning and simplified docking and low-speed manoeuvres without declutching or gear changing or the use of complex controls.

4. Motion Control
A fourth objective of the present invention is to provide fast and efficient thrust vectoring to enable effective 6-dimensional stabilisation for fast craft without the requirement for stabilising foils or other drag-producing control surfaces

5. Speed Range for high propulsive efficiency
A fifth objective is the provision of a propulsion system with very high propulsive efficiency over a broad operating spectrum.

6. Fin Folding
A sixth objective is the provision of means for folding the blades of such propulsion devices for the purposes of beaching or operating in very shallow water.

7. To enable individual changing of fins

When propellers are damaged due to striking logs or other debris, invariably only one or two blades are damaged. The ability to readily change only damaged components can lead to a reduction in cost of replacement

8. To allow fins to be changed in the water

9. To provide a streamlined root section of minimum cross section to minimise churning losses at low craft speeds when the propeller is largely immersed

10. To provide a shape which allows large dihedral angles and folding

11. To allow for simple manufacturing and metrology in volume

12. To minimise weight and optimise stress distribution

13. To minimise control moments and allow for fail safe operation

14. To provide a clean form which does not tend to trap logs and other flotsam in order to reduce damage in case of log strikes.

Variables are:

Dual propulsor installations
Port Pitch, trim and engine speed
Starboard Pitch, trim and engine speed
With 5 variables to control, the speed of the two propulsors may be kept the same
Alternatively, for single or dual propulsor installations:

Collective and Cyclical pitch
Collective and cyclical trim
Engine speed
For dual propulsor installations this provides too many variables so that cyclical controls could be used to optimise for non-axial incoming flow, etc.

In the above cases the word "trim" is taken to mean the means of creating forces to trim the craft, e.g. variable dihedral, variable rake, variable swash, or variable tilt.

Whilst aspects of this invention have application to fixed pitch propellers, it may be more generally applied to controllable pitch propellers which may be provided with collective pitch control or both collective and cyclical pitch control. Cyclical control may be a simple sinusoidal variation or some more complex motion involving higher-order harmonics.

Whilst variable dihedral is the preferred mechanism, similar, if less desirous effects may be achieved by the use of controllable rake. The conventional methods using variable tilt, or variable swash are not suitable due to the large variation in cyclical angle of incidence which results from the use of such mechanisms. This is discussed further in the specific description of Figures 58 to 67.

Aspects of the invention further relate to methods of folding the blades of such propulsion devices for the purposes of beaching or operating in very shallow water.

A craft to which devices including these new inventions are fitted will preferentially be provided with a propulsion management system.

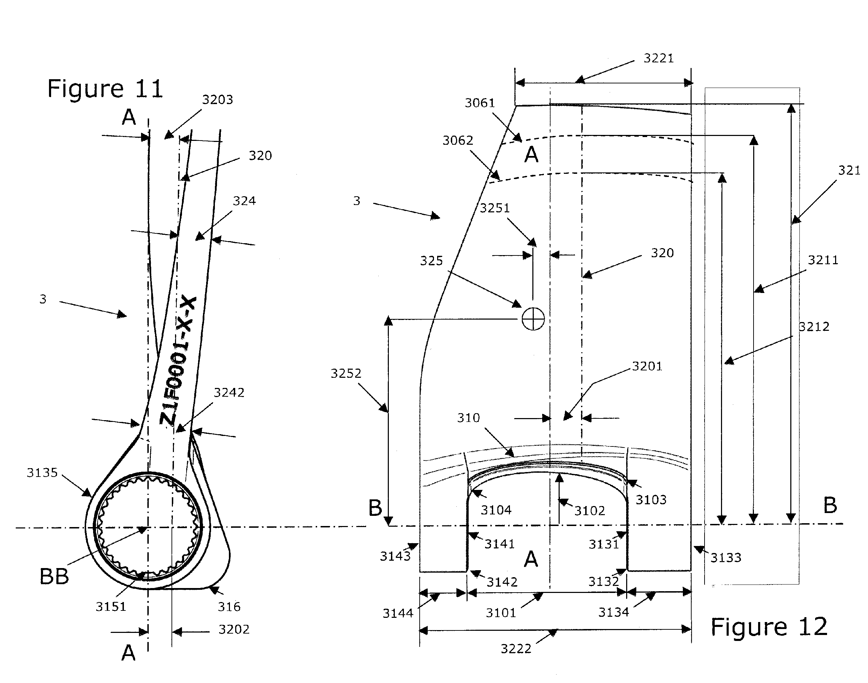

It will be appreciated that the term dihedral angle is not generally used in the definition of propellers. It will be defined by reference to Figure 11 as the angle between the stack axis 320 and the pitch axis AA as it is rotated about axis BB. The stack axis has the same meaning as its usage in the specification and manufacture of turbine blades and is the axis along which sections used in the design and manufacture of such blades are arranged. In the case where the pivot axis lies in a plane normal to the rotation axis of the propeller the dihedral angle will be the same as the rake angle.

The invention enables the propulsion device to control all the motions of the craft, namely: forward and reverse displacement, axial velocity and acceleration or braking; lateral displacement, velocity and acceleration; heave position, heave velocity and acceleration; roll angle, velocity and acceleration, pitch angle, velocity and acceleration, yaw (steering) angle, velocity and acceleration. Such devices as rudders, flaps, foils or stabilisers are not required for these functions, although they may be used in conjunction with the propulsive device of the current invention.

The propulsors of this invention may be used in conjunction with a control system to optimise the attitude of the craft to maximise its speed, acceleration, the general handling and steering of the craft, and its motions in roll, yaw or pitch. An independent aspect of this invention allows for the controlled use of water ballast to optimise the steady-state trim (pitch angle) of the craft. Further aspects of this invention relate to docking a craft and to its operation in the case of the failure of a prime mover or a propulsors.

The propulsors of this invention may also be used in conjunction with a control system for the purposes of dynamic positioning, simplified docking and manoeuvring at low speeds, and for the navigation of the craft.

Aspects of the invention are applicable to craft comprising a single or multiple prime movers. The propulsion system may consist of a single propeller, a single or multiple pairs of contra-rotating propellers in which each pair of propellers rotates about a common axis, or dual or multiple propellers rotating about parallel or individually or collectively orientable axes.

Surface-piercing propellers are known to produce a great deal of vibration due to the cyclical torque and thrust variation which can be as much as 100% of the mean value of either. Undertaking a Fourier transform of the torque or thrust reaction forces indicates that the most energy is in the first and second fin orders, especially for 5 or 6 fins 3 to 6 fins means that forcing frequencies will be present for substantial periods of time over the total frequency spectrum between typically 10hz and 500 Hz

Rear mount deflect - keeping the fin roots within the shadow of the flow guides means that the deflection of the rear mount must be restricted. Conventional mounts require a deflection of up to 6mm in order to achieve the required low frequency isolation, but a mounting having such a characteristic would deflect excessively when subjected to the very much higher forces generated by a propulsion system designed to produce thrust vectoring.

Heretofore, the reaction forces have largely been absorbed by the transom of the craft. Vibratory forces reacted by the transom will generally result in considerable vibration being transmitted throughout the hull structure resulting in high levels of noise and vibration.

Marine propulsion systems to control yaw, axial thrust and side thrust have been proposed by BUECHLER Dirk (EP1008514 - Ship propulsion) and others. Such devices have used controllable pitch and engine speed for these purposes. However, the net side thrust achievable by this means is modest under some conditions and reversing the side thrust direction once motion has been established is difficult.

According to an aspect of the invention, there is provided a propeller comprising: a hub; and a plurality of fins extending radially outwards from the hub,
wherein each fin is moveably connected to hub such that, during rotation of the propeller, either the dihedral, the rake or both the dihedral and the rake of the fin can be altered and controlled by movement of the fin about one or more axes of rotation.

The propeller preferably further comprises a closed loop control system to vary either the dihedral angle, the rake angle or both the dihedral and the rake angle of the fins during use.

The fin may be pivotable about a radial axis so as to control the pitch of the fin. The fin may be pivotable about an axis located in the plane of the rotational axis of the propeller. The fin may be pivotable about an axis generally parallel to the root chord of the fin.

The fins are preferably discretely moveable about at least one axis between at least two positions. The fins may be continuously moveable about at least one axis between two positions.

The propeller may further comprises dihedral angle control means for moving the fins between the first and the second position. The dihedral angle control means is preferably arranged to vary the dihedral angle of the fins during use.

The propeller may comprise pitch control means for controlling the pitch of the fins. The pitch of the fins may be continuously variable. The pitch control means may be arranged to vary the pitch of the fins during operation.

The propeller may be provided with means for varying the dihedral angle of one or more fins during one revolution of the propeller, such that the dihedral angle of any fin at top dead centre can be different to the dihedral angle of the fin at bottom dead centre, and similarly for the cross-axis.

The propeller may be provided with means to vary the pitch of one or more fins during one revolution of the propeller, such that the pitch of any fin at top dead centre can be different to the dihedral angle of the fin at bottom dead centre, and similarly for the cross-axis.

The closed loop control system may also vary the pitch of the fins during use.

The propeller is preferably a surface-piercing propeller.

The range of dihedral angle is independent of the pitch angle.

The propeller may further comprise a master spline within the dihedral section for, in use, aligning the fin in the desired orientation with respect to a hub.

The centre of pressure of the fin is preferably located at a distance of between 50% and 60% of the working surface span from the root section.

The centre of pressure of the fin is preferably located at a distance of between 60% and 70% of the span from the dihedral axis.

The present invention also provides a boat having a hull and at least one propeller as described above, wherein the hull is provided with a fairing in front of the or each propeller and wherein fins are moveable such that they may be wholly positioned within the hull or the fairing profile when viewed from the front.

The hub of the propeller may be contained wholly within the hull profile when viewed from the front.

The invention also provides a vehicle such as a water craft, ship, aircraft or helicopter having at least two propellers as described above, wherein at least one propeller is arranged to the starboard side of the longitudinal axis of said vehicle and at least one propeller is arranged to the port side of the longitudinal axis of said vehicle.

Any propeller arranged to the starboard side of the longitudinal axis of said vehicle preferably rotates in the opposite sense to any propeller arranged to the port side of the longitudinal axis of said vehicle.

Any propeller arranged to the starboard side of the longitudinal axis of said vehicle preferably rotates in a clockwise sense when viewed from the rear and any propeller arranged to the port side of the longitudinal axis of said vehicle rotates in a counter-clockwise sense when viewed from the rear.

The present invention also provides a craft comprising a hull and at least one propeller as described above, wherein the control system is arranged to optimise at least one of the following: the trim angle and motion of the craft by varying the dihedral angle of the fins of the propeller(s); the roll motion of the craft by varying the dihedral angle of the fins of the propellers relative to each other; the roll motion of the craft by varying the dihedral angle of the fins of the propellers and their rotational speed relative to each other; the roll motion of the craft by varying the dihedral angle of the fins of the propellers and their pitch angle relative to each other; and the yaw motion of the craft by varying the pitch of the fins of the propellers relative to each other.

The propeller may comprise pitch control means in which the pitch means comprises two bearings disposed along the pitch axis of any fin in which either or both the first and the second bearings are angular contact bearings disposed such as to increase the effective centres of said bearings.

The propeller may comprises pitch control means in which the pitch means comprises two bearings disposed along the pitch axis of any fin in which either or both the first and the second bearings are spherical bearings disposed such as to increase the effective centres of said bearings.

The pitch control means may rotate any fin about a spherical cup by which said fin is pivotally attached to the hub for dihedral angle control.

The dihedral angle control means may comprise a lever arranged to excerpt a moment about the dihedral angle axis and which comprises a spherical pivot at its inner end.

The dihedral angle control means may further comprise a link pivotally attached to the inner end of the trim lever which is configured such that a first pivot of said link is aligned on the pitch axis when the corresponding fin is arranged at its maximum design dihedral angle and a second pivot is aligned on the pitch axis when said fin is arranged at its minimum design dihedral angle.

The shuttle is preferably configured to move in a substantially helical trajectory about the rotational axis of the propeller with such trajectory passing through, or at a proscribed distance from, the pitch axis of the corresponding fin.

The trajectory of the fixing point of the link onto the shuttle preferably bisects the angle of the link at the maximum forward pitch angle and the maximum reverse pitch angle, but it may be at some other desirable angle.

The pivot at the inner end of the dihedral angle lever is preferably free to slide in a radial direction in the shuttle. The shuttle may be constrained to move along a helical trajectory.

The pitch angle is preferably arranged to be independent of the dihedral angle throughout its controlled range and is preferably arranged to be independent of the dihedral angle throughout its desirable working range.

The pitch control moment range is preferably minimised.

Preferably, the pitch moment is arranged to be such that its direction is not changed during normal operation of the propeller.

One or more actuators are preferably provided to control each of the pitch and dihedral movement. These actuators may be arranged such that the actuators work together to control the dihedral movement and such that the actuators work differentially and/or independently to control the pitch movement.

The dihedral actuation may have a discontinuity between the normal operating range and the folding range such that the pitch angle can be set to some optimum value prior to the folding operation.

The dihedral actuation may comprise a sector gear operating on the fin holder.

According to an aspect of the invention, there is provided a fin for use on a propeller, the fin comprising: a lift generating section having a leading edge and a trailing edge, and a pair of surfaces extending between the leading and the trailing edges thereby defining a tip section and a root section; and a dihedral section connected to the root section of the lift generating section and having an axis about which, in use, the lift generating system can be rotated to vary the dihedral of the fin, the axis being generally parallel to the root section of the lift generating section.

The axis of rotation is preferably within a 15 degrees deviation from the root section, more preferably the axis of rotation deviates by no more than 3 degrees from the root section. The axis of rotation may be parallel to the root section.

The dihedral section may comprise a front boss adjacent the leading edge and a rear boss adjacent the trailing edge. Each boss is preferably provided with a through hole which is splined for engagement with a corresponding spline on a shaft in use. The axis of rotation preferably passes through the centres of the through holes in each boss.

The front boss may advantageously blend smoothly into the leading edge such that no re-entrant is formed between the boss and the leading edge.

The fin may have a pitch axis and a stack axis and the pitch axis is preferably closer than the stack axis to the leading edge. The stack axis preferably does not pass through the axis of rotation. The stack axis may be angled relative to the pitch axis. The centre of pressure of a fin may be located forward of the pitch axis.

The fin may further comprise a stop element mounted on either or both of the front and rear bosses for limiting rotation of the fin about the axis of rotation in at least one direction.

The fin may be provided with a surface between the front and rear bosses at the root of the fin shaped such that, when the fin is mounted on a yoke, the surface at the root of the fin acts, during rotation, to remove marine growth, sediment or other unwanted material from the yoke.

According to an aspect of the invention, there is provided a modular propeller system having: a plurality of substantially identical fin assemblies; and a plurality of hubs, each hub being arranged to receive a different number of the substantially identical fin assemblies; wherein a propeller of the desired number of fins can be created by the selection of the appropriate hub and the required number of the substantially identical fin assemblies.

Each fin assembly may include a fin having a lift generating surface and a leading and a trailing edge.

Each fin assembly preferably comprises a turret on which the fin is mounted, the turret being arranged to be connected, in use, to an engagement means in one of the hubs.

Each fin assembly is may be connected directly to the hub.

Each hub may be provided with a plurality of engagement means, each engagement means being associated with a respective fin assembly. Each engagement means on each hub of the plurality of hubs is preferably identical.

Each hub may be formed from two cooperating sections and the two sections are, when constructed, preferably aligned along the rotational axis of the propeller.

The hub sections may be provided with cooperating recesses which, when the sections are aligned, define the desired number of receiving locations for the plurality of fin assemblies.

The invention also provides a hub for a marine propeller, the hub being formed from two cooperating sections which, when forming the hub, are aligned along the rotational axis of the hub.

The two cooperating sections preferably define a plurality of recesses into each of which a fin assembly can be inserted, thereby forming a propeller.

According to an aspect of the present invention there is provided a mount for supporting part of a marine drive system to a marine hull, the mount comprising:

a rigid outer housing defining a radially outer circumferential surface on its radially inner surface;
a resilient mounting disposed radially within the outer housing and defining a radially inner circumferential surface, the marine drive system passing through and supported by the resilient mounting in use;

wherein a circumferential radial gap is provided either between the resilient mounting and the rigid outer housing or within the resilient mounting.

The rigid outer housing may be substantially annular.

The rigid outer housing may be circular.

The rigid outer housing may have an eccentric form.

The resilient mounting may be substantially annular.

The resilient mounting may be circular.

The resilient mounting may have an eccentric form.

Preferably, upon operation of the marine drive system the marine drive system radially deflects an arcuate portion of the resilient mounting into a corresponding arcuate portion of the gap.

Preferably, wherein the gap is dimensioned such that the rate of force produced by the marine drive system to the radial deflection of the marine drive system is substantially linear.

Preferably, the gap is dimensioned such that the highest solid-body resonant frequency of the marine drive system is less than $\frac{1}{\sqrt{2}}$ times the lowest forcing frequency generated by the marine drive system.

Preferably, upon operation of the marine drive system the marine drive system deflects an arcuate portion of the resilient mounting into a corresponding arcuate portion of the gap and compresses the arcuate portion of the resilient mounting against the rigid outer housing.

Preferably, the gap is dimensioned and the resilient mounting is formed such that the rate of force produced by the marine drive system to the radial deflection of the marine drive system increases progressively.

Preferably, the resilient mounting is formed from a micro-cellular polyurethane material.

Preferably, the circumferential radial gap is an air gap and is provided over an axial length of the resilient mounting. The remaining axial length of the resilient mounting is compressed, in use, such that it forms a seal between the outer circumferential surface and the inner circumferential surface.

A marine craft may be provided having a hull and a transom positioned at the rear of the craft, the craft comprising a marine drive system attached to the transom by means of the mount according to any one of the preceding claims.

According to the present invention there is provided a mount for supporting part of a marine drive system on a marine hull, the mount comprising:

> an annular resilient member having radially spaced inner and outer circumferential surfaces, wherein an annular groove forming an air gap is provided between the inner and outer circumferential surfaces.

According to the present invention there is provided a marine drive system comprising:

> an engine connected to a gearbox by means of a drive shaft;
> a propeller connected to the gearbox by means of a propeller shaft;

wherein the gearbox and the propeller are formed as a single rigid body for mounting in the hull of a marine craft as a single unit; and
wherein the engine, gearbox and propeller are positioned such that they are generally aligned with the longitudinal axis of the craft.

The gearbox may be disposed remotely from the engine and a rigid frame is connected between the gearbox and the craft.

The drive shaft may be formed from carbon fibre.

The single rigid body may comprise the engine, gearbox and propeller for mounting in the hull of a marine craft as a single unit.

The engine and the gearbox may be positioned adjacent to each other.

Preferably, the engine, gearbox and propeller are aligned along the longitudinal axis of the craft.

The marine drive system may further comprise a second propeller connected to the gearbox by means of a second propeller shaft, the engine and the gearbox being aligned along the longitudinal of the craft and the propellers being aligned with the longitudinal axis of the craft.

The marine drive system may further comprise a second single rigid body; and

wherein each single rigid body is generally aligned with the longitudinal axis of the craft.

Preferably, the ratio of the propeller diameter to the propeller shaft diameter is in the range of 4.5 to 5.5

Preferably, the ratio of the propeller shaft diameter to the propeller shaft length is in the range of 0.65 to 0.9.

Preferably, the gearbox has an input shaft driven by the engine and the ratio of the propeller shaft diameter to the input shaft diameter is in the range of 2.2 to 3.5.

Preferably, the ratio of the input shaft diameter to the input shaft length is in the range of 0.5 to 0.62.

Preferably, the single unit is provided with front mounting points adjacent to the engine and rear mounting points adjacent to the gearbox, for attaching to the hull of the marine craft,

> the rear mounting points being positioned at 8% to 12% of the overall length of the marine drive system from the centre of the propeller; and
> the front mounting points being positioned at 40% to 60% of the overall length of the marine drive system from the rear mounts.

A marine craft may be provided having a hull and a transom, the marine craft comprising a marine drive system according to any one of the preceding claims;
wherein the marine drive system is flexibly mounted to the hull of the marine craft.

According to an aspect of the present invention there is provided a marine drive system comprising:

> an engine connected to a gearbox by means of a drive shaft;
> a propeller connected to the gearbox by means of a propeller shaft;

wherein the engine, gearbox and propeller are formed as a single rigid body for mounting in the hull of a marine craft as a single unit; and
wherein the engine, gearbox and propeller are positioned such that they are generally aligned with the longitudinal axis of the craft.

Preferably, the rotational axes of the drive shaft, the propeller shaft and the propeller are generally aligned with the longitudinal axis of the craft.

According to the present invention there is provided a propulsion assembly comprising:

> a hub;
> a plurality of fins moveably connected to the hub such the pitch angle of each fin can be controlled;
> a pitch shuttle moveable, by means of a pitch actuator, along an axis coaxial with the axis of the hub;
> a plurality of pitch linkages each connecting the pitch shuttle with one of the fins arranged such that upon movement of the pitch shuttle, the pitch angle of each fin is varied.

Preferably the propulsion assembly further comprises means for controlling the dihedral angle of each fin.

Preferably the means for controlling the dihedral angle of each fin comprises:

a dihedral shuttle moveable, by means of a dihedral actuator, along an axis coaxial with the axis of the hub;
a plurality of dihedral linkages each connecting the dihedral shuttle with one of the fins arranged such that upon movement of the dihedral shuttle, the dihedral angle of each fin is varied.

According to the present invention there is provided a propulsion assembly comprising:

a hub;
a plurality of fins moveably connected to the hub such the dihedral angle of each fin can be controlled;
a dihedral shuttle moveable, by means of a dihedral actuator, along an axis coaxial with the axis of the hub;
a plurality of dihedral linkages each connecting the dihedral shuttle with one of the fins arranged such that upon movement of the dihedral shuttle, the dihedral angle of each fin is varied.

Preferably the propulsion assembly further comprises means for controlling the pitch angle of each fin.

Preferably the means for controlling the pitch angle of each fin comprises: a pitch shuttle moveable, by means of a pitch actuator, along an axis coaxial with the axis of the hub;

a plurality of pitch linkages each connecting the pitch shuttle with one of the fins arranged such that upon movement of the pitch shuttle, the pitch angle of each fin is varied.

Preferably each of the dihedral linkages has a first end which is spherically pivoted to the dihedral shuttle; and

a plurality of swing links are provided at the point of connection of each dihedral linkage to the dihedral shuttle;
each swing link having a first end spherically pivoted to the dihedral shuttle and a second end spherically pivoted to a point on the hub.

Preferably each swing link is arranged such that upon movement of the dihedral shuttle along the axis coaxial with the axis of the hub, the dihedral shuttle is caused to rotate around the axis coaxial with the axis of the hub in a helical manner.

Preferably the pitch angle and the dihedral angle can be independently varied.

A plurality of dihedral levers may be provided, each connecting one of the fins with a second end of one of the dihedral linkages, each dihedral lever having an inner end which is spherically pivoted to the second end of one of the dihedral linkages.

Preferably the dihedral levers and the dihedral linkages are configured such that the first end of each dihedral linkage is coaxial with the pitch axis when the fin is at a minimum design dihedral angle, during operation of the propulsion assembly.

Preferably the dihedral levers and the dihedral linkages are configured such that the second end of each dihedral linkage is coaxial with the pitch axis when the fin is at a maximum design dihedral angle, during operation of the propulsion assembly.

The propulsion assembly may further comprise two bearings disposed along the pitch axis of each fin and either or both of the bearings are angular contact bearings disposed such as to increase the effective centres of said bearings or either or both of the bearings are spherical bearings disposed such as to increase the effective centres of said bearings.

Embodiments of the various inventions will now be described with reference to the accompanying drawings, in which:

Figure 1        Propulsor comprising 6 fins arranged for controllable pitch and dihedral
Figure 10      Isometric view of a propulsor fin arranged for controllable pitch and dihedral
Figure 11      End view of a propulsor fin arranged for controllable pitch and dihedral
Figure 12      Side view of a propulsor fin arranged for controllable pitch and dihedral
Figure 13      Top view of a propulsor fin arranged for controllable pitch and dihedral
Figure 14      Sectional view of a propulsor fin arranged for controllable pitch and dihedral
Figure 15      Side view of a propulsor fin arranged for controllable pitch and dihedral with positive or negative skew.

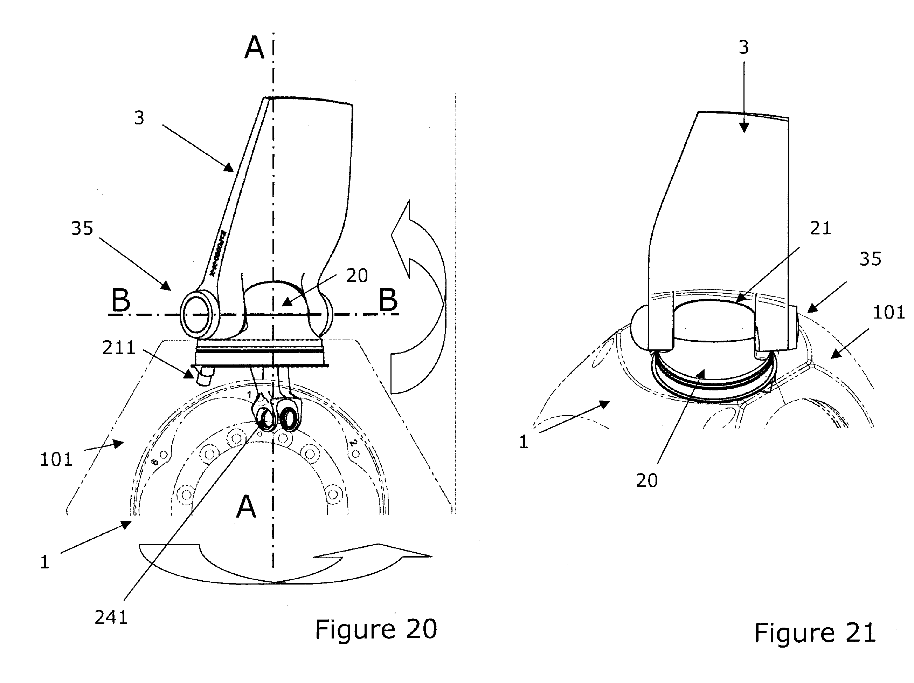

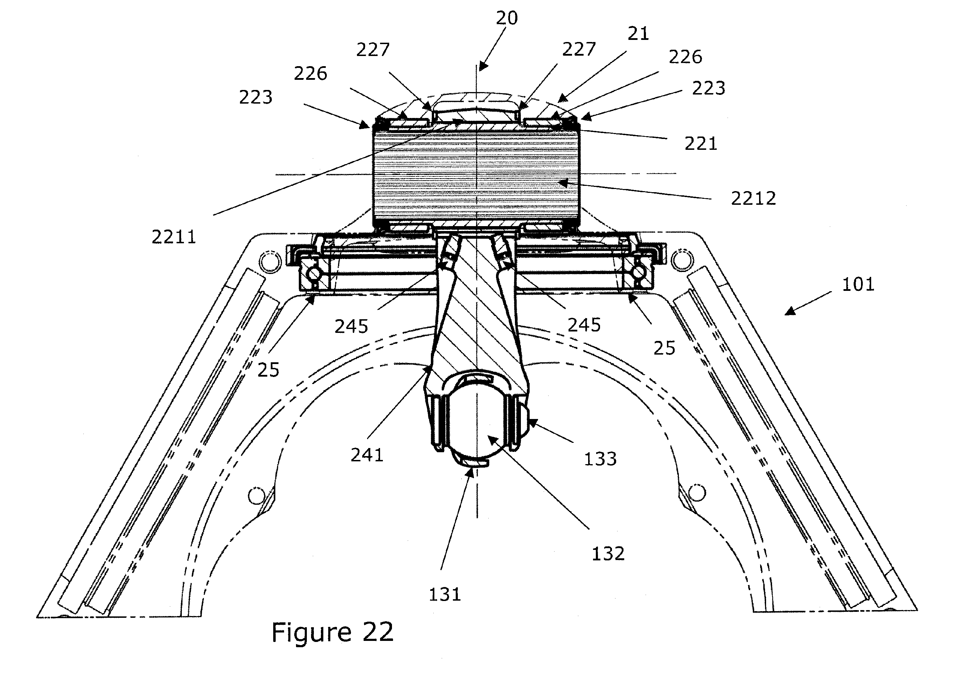

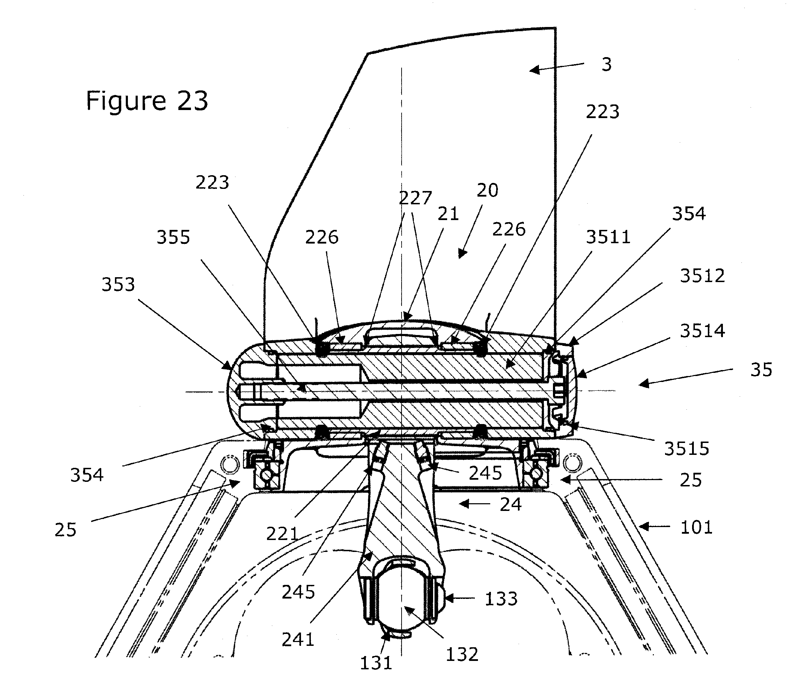

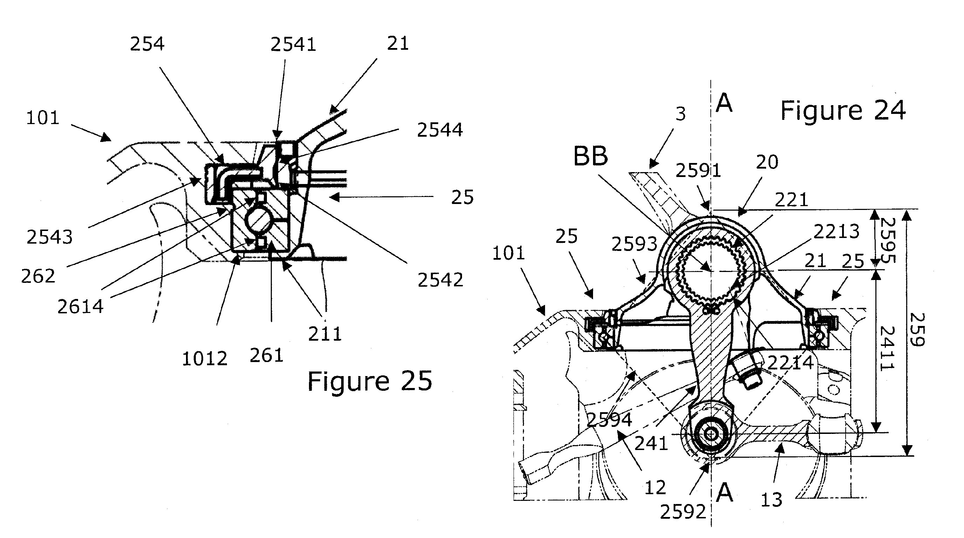

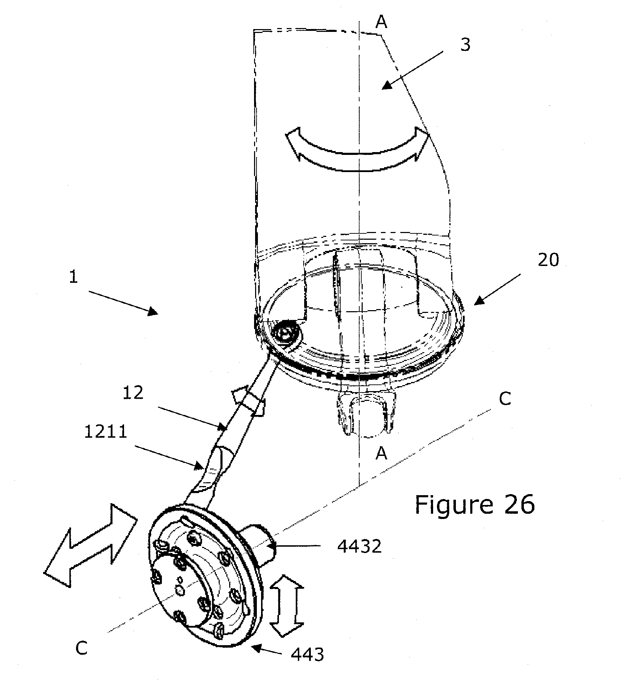

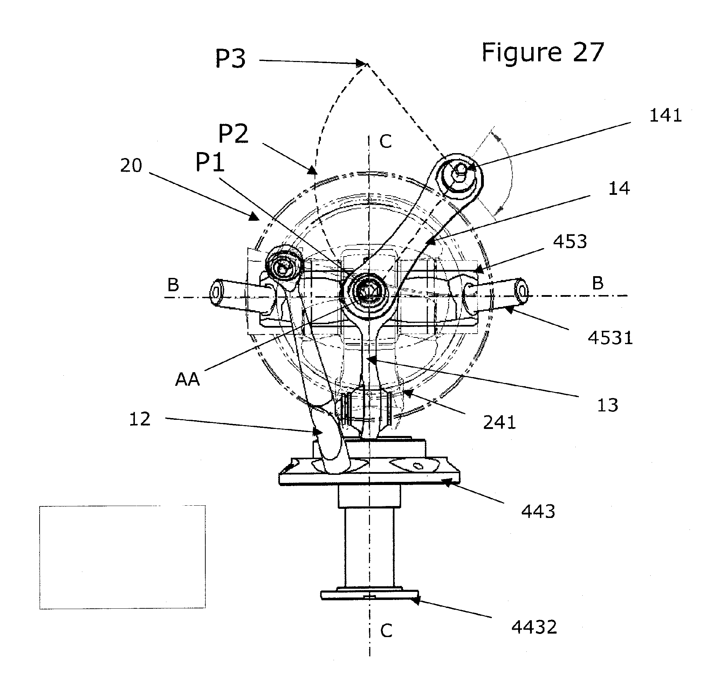

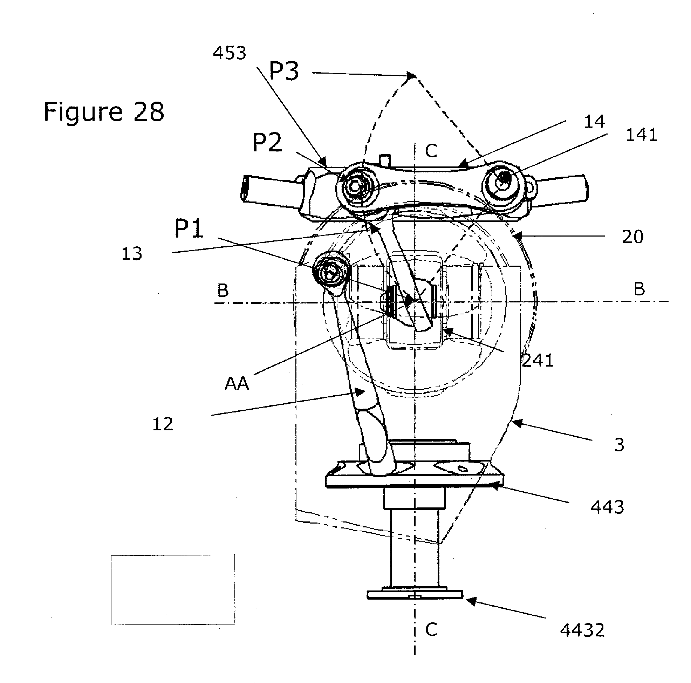

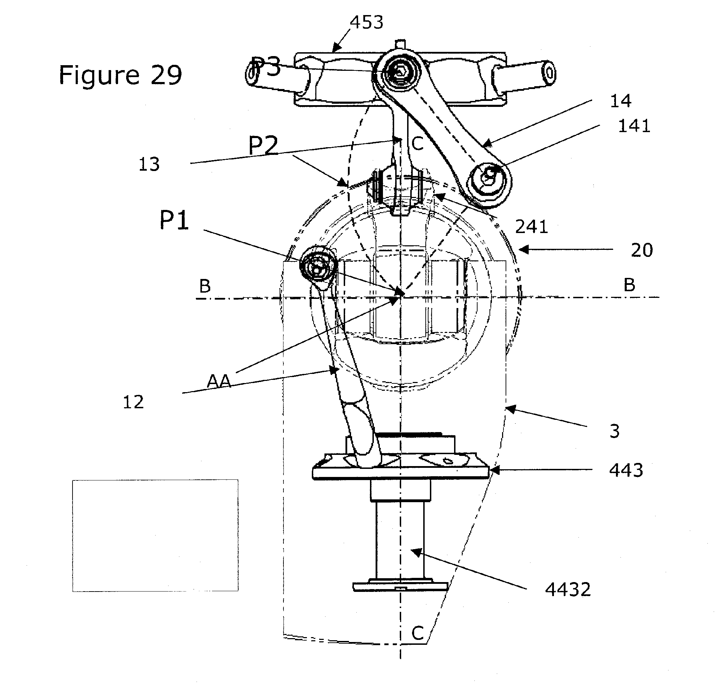

Figure 20      Isometric view of a fin assembly mounted to a hub

| | |
|---|---|
| Figure 21 | Isometric view of a fin assembly mounted to a hub |
| Figure 22 | Detail section transverse view of a fin turret assembly without fin |
| Figure 23 | Detail section transverse view of a fin turret assembly with a fin attached |
| Figure 24 | Detail cross-section of a turret assembly with fin, together with bearing arrangements |
| Figure 25 | Detail cross-section of a turret bearing assembly |
| Figure 26 | Detail of pitch mechanism |
| Figure 27 | Detail of the pitch and dihedral mechanism from inside the hub with 90degrees pitch and 0 degrees of dihedral |
| Figure 28 | Detail of the pitch and dihedral mechanism from inside the hub with 90degrees pitch and 45 degrees of dihedral |
| Figure 29 | Detail of the pitch and dihedral mechanism from inside the hub with 90degrees pitch and the fin folded |
| Figure 30 | Detail of the pitch and dihedral mechanism from inside the hub with 40degrees pitch and 0 degrees of dihedral |
| Figure 31 | Force diagram |
| Figure 32 | Rectangular Envelope for Pitch and Dihedral |
| Figure 33 | Detail of the pitch and dihedral mechanism from the side. Pitch set to 90 degrees with the fin folded |
| Figure 34 | Detail of the pitch and dihedral mechanism from the side. Pitch set to 90 degrees and 45 degrees of dihedral |
| Figure 35 | Detail of the pitch and dihedral mechanism from the side. Pitch set to 90 degrees and 0 degrees of dihedral |
| Figure 36 | Detail of the pitch and dihedral mechanism from inside the hub with 40degrees pitch and 45 degrees of dihedral |
| Figure 37 | Isometric view of the pitch and dihedral mechanism from inside the hub with 40degrees pitch and 45 degrees of dihedral |
| Figure 38 | Isometric view of a modular hub without fins - exploded view |
| Figure 39 | Isometric view of a modular hub with one fin assembly in position |
| Figure 40 | Side view of a modular hub with one fin assembly and pitch and dihedral shuttles in position |
| Figure 41 | Isometric view of a modular hub with four fin assemblies in position |
| Figure 42 | Isometric view of a modular hub with four fin assemblies folded |
| Figure 43 | Isometric view - Propulsor Hubs in Flow Guide Cavity - Hubs Non-Solid of Revolution |
| Figure 44 | Rear view of a modular hub with six fin assemblies in position |
| Figure 45 | Side view of a modular hub with six fin assemblies in position |
| Figure 46 | Rear view of a modular hub showing bolting pattern to propeller shaft |
| Figure 50 | Rear of a raked propeller |
| Figure 51 | Isometric view of a raked propeller |
| Figure 52 | Rear view of an un-raked propeller |
| Figure 53 | Isometric view of an un-raked propeller |
| Figure 54 | Rear view of a propeller with dihedral |
| Figure 55 | Isometric view of a propeller with dihedral |
| Figure 56 | Rear view of a propeller with zero dihedral |
| Figure 57 | Isometric view of a propeller with zero dihedral |
| Figure 58 | Rear view of a propeller with zero swash |
| Figure 59 | Isometric view of a propeller with zero swash |
| Figure 60 | Rear view of a swashed propeller |
| Figure 61 | Isometric view of a swashed propeller |
| Figure 62 | Side view of a swashed propeller |
| Figure 63 | Rear view of an un-tilted propeller |
| Figure 63 | Isometric view of an un-tilted propeller |
| Figure 64 | Side view of an un-tilted propeller |
| Figure 65 | Rear view of a tilted propeller |
| Figure 66 | Isometric view of a tilted propeller |
| Figure 67 | Side view of a tilted propeller |
| Figure 81 | Control schematic for pitch and engine speed |
| Figure 82 | Control schematic for dihedral |
| Figure 83 | Control schematic for dihedral with IMU/INS input |
| Figure 101 | Propulsion mounting arrangement, dual engine |
| Figure 102 | Propulsion mounting arrangement, single engine |
| Figure 103 | Typical load-deflection curve, rear mount |
| Figure 104 | Sectional view through a rear mount |
| Figure 105 | Detail sectional view |

Figure 106     Sectional view through an alternative rear mount
Figure 107     Engine & Propulsion unit with typical deflection curve for lowest bending frequency (vertical)
Figure 108     Engine & Propulsion unit with typical deflection curve for lowest bending frequency (horizontal)
Figure 109     Propulsion unit with separately mounted engine with typical deflection curve for lowest bending frequency (vertical)
Figure 110     Typical cyclical thrust and torque variation for a 5-bladed propulsor
Figure 111     Fourier Analysis of cyclical thrust
Figure 112     Simplified cyclical thrust force
Figure 113     Typical 6th and 12th order transmission factors
Figure 114     Typical mounting transmission factor
Figure 115     Typical combined transmission factor
Figure 116     Drivetrain arrangement
Figure 117     Isometric view of the underside of a hull with a flow guide and propeller
Figure 118     Rear view of a hull with a flow guide and propeller
Figure 119     Single engine power train
Figure 120     Turret assembly arranged for rake
Figure 131     Propeller arranged for cyclical pitch, rake and dihedral
Figure 133     Detail of propeller arranged for cyclical pitch, rake and dihedral
Figure 140     Lift drag curve for high-efficiency ventilating sections
Figure 141     Lift coefficient curve for high-efficiency ventilating sections

SPECIFIC DESCRIPTION

Figure 1

A propulsor 1 is arranged to rotate about axis CC and comprises a hub 101 and six fins 3 each mounted to a turret 20 arranged for independent pivotal motion about a pitch axis AA and a dihedral axis BB. Axis AA is generally normal to the propeller axis CC. Axis BB is generally arranged at 90 degrees to axis AA.
Fin 3 comprises a stop 316 which reacts against a planar area of yoke 21.

Figure 10

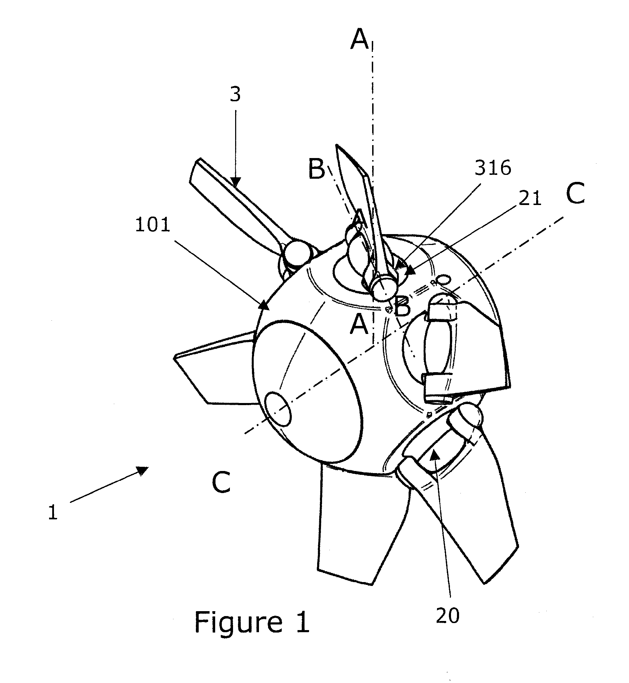

A propulsor fin 3 comprises a lift generating section 30 and a root section 31.
The lift generating section comprises a normally wetted surface 301, a leading edge 302, a trailing edge 303 and a normally un-wetted surface 304.
The normally un-wetted surface is vented to atmospheric pressure during normal forward thrust conditions. During reverse-thrust conditions surface 304 may become fully wetted and surface 301 may become fully un-wetted. Under intermediate conditions either surface may be partially wetted.
The root section (also referred to as "dihedral section" as it is the section that allows the dihedral to be altered) blends smoothly into the normally wetted and normally un-wetted section along two lines 305. The root section is un-wetted during normal operation but becomes partially or fully wetted at low speeds.
The root section has a generally smooth profile which may be a surface of revolution about an axis BB and comprises a leading edge boss 314, a trailing edge boss 313 and a bridge section 310. The leading and trailing edge bosses comprise a common spline profile 315 preferentially having a master spline 3151.
The trailing edge boss 313 comprises an inner face 3131 and an outer face 3133 which are normal to axis BB. A lead in 3132 is provided at the bottom of the inner face 3131. The trailing edge boss 313 also comprises a stop 316 on the normally un-wetted side of fin3. This stop reacts against against a corresponding surface on the yoke 21 (see Figure 1)
The leading edge boss 314 comprises an inner face 3141 and an outer face 3143 which are normal to axis BB. A lead in 3142 is provided at the bottom of the inner face 3131. The outer profile 3145 of the leading edge boss is arranged to achieve a minimum wall thickness around the splined centre consistent with maintaining adequate fatigue life and a smooth hydrodynamic shape.
A root section of fin 3 is angled at a small angle θR to axis BB. A tip section of fin 3 is angled at a larger angle θT to axis BB. The angles θR and θT are preferentially disposed on the same side of axis BB, but may be disposed on different sides of said axis. The twist of the fin is defined by the expression

$$\text{Twist} = \theta_T - \theta_R$$

Wherein the twist is normally below 20 degrees and preferentially in the range 12 degrees to 16 degrees.

Propeller blades and other such lifting surfaces have traditionally been made by stacking a number of discrete sections together along a common axis and then fairing the complete surface. Even though the use of numerically controlled machines has largely replaced this practice the concept of the use of a "stacking axis" is still in common use.

Figure 11

The stacking axis 320 is shown having an offset 3202 from axis BB and inclined at an angle 3203 relative to the pitch axis AA. Such an offset may be used to reduce the centripetal moment excerpted by fin 3 about axis BB when the fin is in its normal range of dihedral angle inclined anticlockwise about axis BB by 5 degrees to 35 degrees. The trailing edge thickness 324 reduces from 3242 at the root to 3241 at the tip.

The outer profile 3135 of the trailing edge boss is arranged to achieve a minimum wall thickness around the splined centre consistent with maintaining adequate fatigue life and a smooth hydrodynamic shape.

Figure 12

The stacking axis 320 is shown arranged at a distance 3201 behind the pitch axis AA such that the fin centre of pressure 325 is at a distance 3251 forward of the pitch axis AA. It will be appreciated that the centre of pressure position will vary during operation, but that the control moment about the pitch axis should be kept low in order to limit the size of the pitch control mechanism. By keeping the centre of pressure in front of the pitch axis as depicted any failure of the pitch mechanism will normally ensure that the fin rotates to its maximum forward pitch position.

The centre of pressure 325 is shown at a distance 3252 from the dihedral axis BB. The dihedral control moment is governed by this distance and it will be appreciated by those skilled in the Art that this distance is very small in comparison with other methods of thrust vectoring.

The fin has a root chord 3222 and a tip chord 3221. The root chord is shown as being identical to the root length for manufacturing simplicity and compactness, but it will be realised that the root could extend forward and/or rearwards relative to the root chord.

A key feature of the present invention is the ability to create a family of fins from a single forging. The fin is shown with a span 321, but the same forging may conveniently be cut down to tip profiles indicated by 3061 and 3062 having spans 3211 and 3212 respectively.

The trailing edge root section 313 has an outer plane face 3133 and an inner plane face 3131 both arranged to be normal to the dihedral axis BB, and is arranged with a width 3134.

The leading edge root section 314 has an outer plane face 3143 and an inner plane face 3141 both arranged to be normal to the dihedral axis BB, and is arranged with a width 3144.

The root bridge section 310 is arranged with a profile of varying radius 3102 swept about axis BB. The swept bridge profile is blended into the inner faces 3131 and 3141 with blending surfaces 3103, 3104.

The inner surfaces 3132, 3142 of root bosses 313, 314 are arranged with surfaces finished for dynamic face seals. The outer surfaces 3133, 3143 are finished for static seals.

Figure 13

The top view shows the relationship between $\theta_T$ and $\theta_R$.

Figure 14

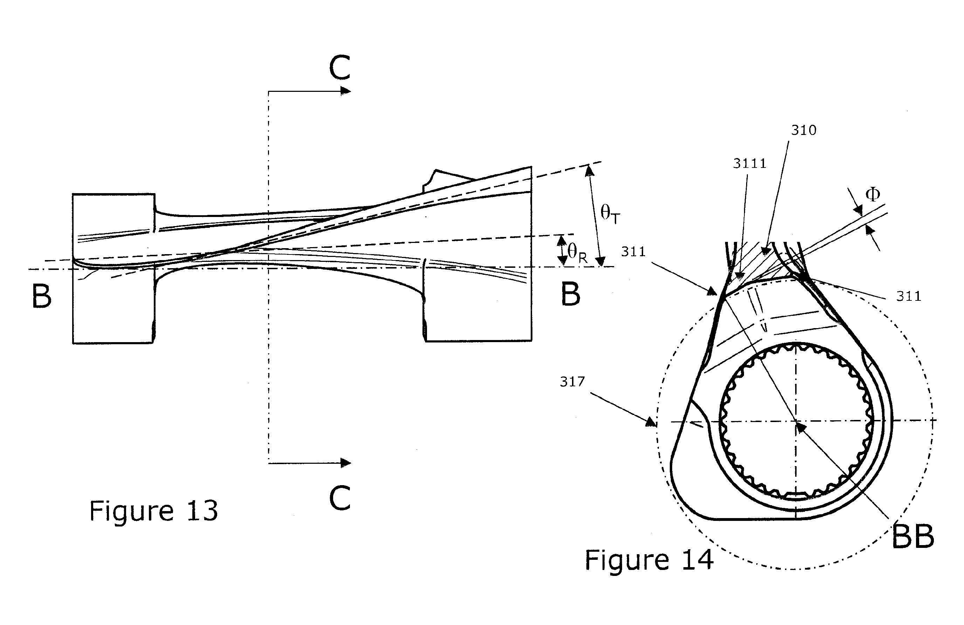

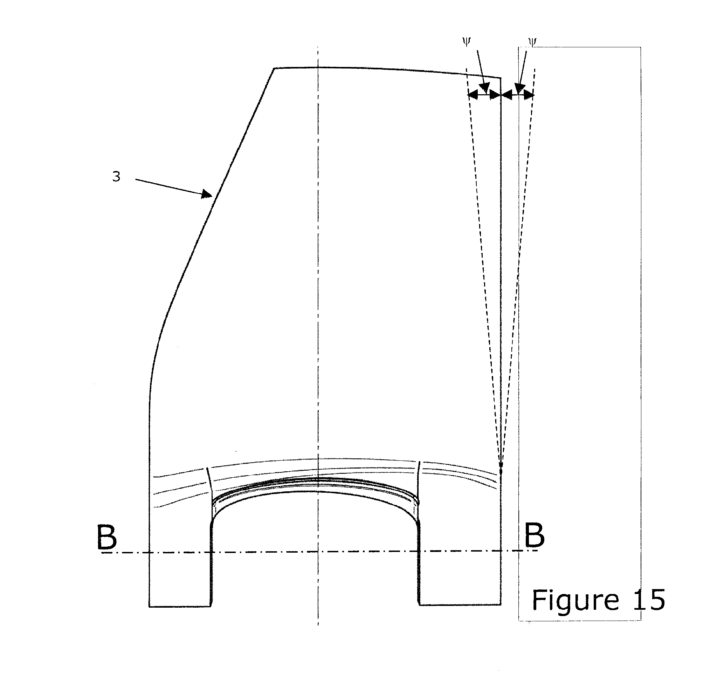

Figure 14 shows a part section CC derived from Figure 13 with a detail of the preferred profile for the bridge section. Two edges 311 are arranged with radial flanks to remove any marine growth from the arcuate surface 317 of the mating component. The Internal profiles 3111 are arranged with a positive angle $\phi$ to the surface normal to ensure that crustaceans and other debris does not jam. An alternative option uses a arcaute profile between the tangent points.

Figure 15

Whereas the preferred embodiment has a trailing edge normal to the dihedral axis BB to simply manufacture and metrology, the trailing edge may be skewed positively or negatively through angle $\psi$ as desired.

A removeable fin according to this invention may beneficially have dimensions within the ranges shown in the table below:

| Feature | Min | Max | Key parameter |
|---|---|---|---|
| Maximum span | 100.00% | | |
| Reduced span | 75.87% | 100.00% | |
| Max working surface span | 77.23% | 82.73% | Of actual span from tip |
| Root chord | 50.00% | 70.00% | Of max span |
| Tip chord | 35.00% | 48.00% | Of max span |
| Average chord | 45.00% | 65.00% | Of max span |
| Spline/shaft diameter | 14.00% | 17.50% | Of max span |
| Tip trailing edge thickness | 6.00% | 8.00% | Of tip chord |
| Root trailing edge thickness | 9.00% | 13.00% | Of root chord |
| Average trailing edge thickness | 7.00% | 10.00% | Of average chord |
| Root cut-out width | 50.00% | 65.00% | Of root chord |
| Trailing edge boss width | 25.00% | 21.00% | Of root chord |
| Leading edge boss width | 16.00% | 20.00% | Of root chord |
| Centre of Pressure position relative to the root section | 50.00% | 60.00% | Of working surface span |
| Centre of Pressure position relative to the dihedral axis | 60.00% | 70.00% | Of span from dihedral axis |
| Stack axis offset - dihedral axis | 0.00% | 10.00% | Of root chord |

Figure 20

A propulsor 1 is shown with a single fin 3 mounted by a retaining pin assembly 35 to a turret 20. Turret 20 is fixed to a hub 101 arranged for a plurality of fins. Turret 20 is arranged such that movement of a pitch pivot pin 211 results in rotation of the turret assembly and its attached fin about axis AA, and movement of a dihedral lever 241 results in rotation of the fin about axis BB.

Figure 21

Shows an external view of propulsor 1 with a single fin 3 mounted by a retaining pin assembly 35 to a turret 20. Turret 20 comprises a yoke 21 of generally ellipsoidal upper section.

Figure 22

Shows a sectional view of a turret 20 without a fin 3 or retaining pin assembly 35 fitted. Turret 20 comprises a yoke 21 of generally ellipsoidal upper section having a transverse bore in which a fin carrier 221 is arranged to pivot. Fin carrier 221 is preferentially arranged with external splines 2211 of a central section and internal splines 2212 which may extend over its entire length. Internal spline 2212 preferentially comprises a master spline (not shown) for Poka Yoke assembly. External spline 2211 may also comprise a master spline.

A dihedral lever 241 is fitted to the external splines and may be locked in place by one or more grub screws 245 reacting against a thinned down section of the lever. Thrust washers 227 either side of the dihedral lever react side thrust from lever 241 against internal flanks in the bore of yoke 21. Journal bearings 226 react forces from the fin and dihedral lever into yoke 21. Seals 223 maintain a seal between the internal bore of yoke 21 and the external surfaces of fin carrier 221 and also seal against the internal faces (not shown) of fin 3 (not shown). A four-point, bearing and seal cartridge 25 retains the turret assembly 21 in the propeller hub 101 and is sufficiently dimensioned to take the radial, axial and tilting loads imposed by fin 3 and dihedral lever without brinelling under the continuous load fluctuation excerpted by fin 3.

A dihedral link, 131 comprising a high-capacity plain spherical bearing 132 is retained to the inner end of dihedral lever 241 by screw 133.

Figure 23

Shows a sectional view of a turret 20 with a fin 3 and retaining pin assembly 35 fitted. Turret 20 comprises a yoke 21 of generally ellipsoidal upper section having a transverse bore in which a fin carrier 221 is arranged to pivot. Fin carrier 221 is preferentially arranged with external splines 2211 of a central section and internal splines 2212 which may extend over its entire length. Internal spline 2212 preferentially comprises a master spline (not shown) for Poka Yoke assembly. External spline 2211 may also comprise a master spline.

A dihedral lever 241 is fitted to the external splines and may be locked in place by one or more grub screws 245 reacting against a thinned down section of the lever. Thrust washers 227 either side of the dihedral lever react side thrust from lever 241 against internal flanks in the bore of yoke 21. Journal bearings 226 react forces from the fin and dihedral lever into yoke 21. Seals 223 maintain a seal between the internal bore of yoke 21 and the external surfaces of fin carrier 221 and also seal against the internal faces (not shown) of fin 3 (not shown). A four-point, bearing and seal cartridge 25 retains the turret assembly 21 in the propeller hub 101 and is sufficiently dimensioned to take the radial, axial and tilting loads imposed by fin 3 and dihedral lever without brinelling under the continuous load fluctuation excerpted by fin 3.

A dihedral link, 131 comprising a high-capacity plain spherical bearing 132 is retained to the inner end of dihedral lever 241 by screw 133.

The root section of fin 3 is yoke-shaped. The fin is assembled by pushing the inner faces of the leading and trailing edge bosses over the projecting sealing lips of seals 223. Once in position pin 3511 is inserted. Nose cone 353 and end cap 3512 complete with O-rings 354 are then pushed in either end of the fin bore. Once in position screw 355 is inserted and tightened and plug 3514 with it seal 3515 is inserted. This arrangement provides an exceptionally robust pivot and allows the simple exchange of individual fins when required.

Figure 24

Shows a cross axis section through a propeller hub 101 and a turret 20. The turret 20 comprises a yoke 21, a fin carrier 221 externally splined to a dihedral lever 241, the splines preferentially comprising a master spline 3314, and comprising internal splines preferentially including a master spline 2213. A dihedral link 13 is spherically jointed to the lower end of the dihedral lever 241. The length between axes of the dihedral lever 241 is 2411.

A bearing cassette 25 fitted to an abutment at the lower end of yoke 21 is a arranged with contact angles such that reaction vectors 2593, 2594 intersect the pitch axis AA at 2591, 2592 respectively. The distance between these two intersection points is 259. The distance 2595 between the dihedral pivot axis BB and point 2591 and the distance 259 should each be as great as possible to resist the turning moment about the pivot axis BB excerpted by the lift and centripetal moment generated by fin 3 and the control moment excerpted by the dihedral lever 241

Figure 25

Shows a detail section through the pitch bearing cassette 25 which preferably comprises a four-point full-complement bearing 261 comprising an upper and a lower seal 2614, a split inner ring and a single outer ring. The split inner ring is clamped to an abutment ring 211 of yoke 21 by a cylindrical seal counterface 2544. Counterface is preferentially manufactured from a hardened stainless steel and coated by vapour deposition or other suitable method.

Seal 254 preferably comprising an outer lip 2541 and inner lip 2542 and an external static sealing arrangement 2543 is preferably trapped between the outer race of bearing 261 and an abutment 1011 formed in the propeller hub 101. Sealing lips 2541, 2542 rotate about the seal counterface 2544.

Bearing 261 is preferential maintained against an abutment 1012 in the hub by a pressure ring 262.

Figure 26

Shows a detail of the pitch control mechanism of propeller 1. Turret 20 with its attached fin 3 is free to rotate about the pitch axis AA. A pitch shuttle 443 is free to slide along and pivot about slider 4432 which is attached to hub 101 (not shown) of propeller 1. A pitch link 12 is screwed to an abutment arranged in shuttle 443 and spherically pivoted to pin 211 (not shown) of yoke 21 (not shown). Pitch link 12 comprises an elastic hinge 1211. The pitch shuttle position along axis CC is controlled by an actuator (not shown). Movement of the pitch shuttle along axis CC causes the turret 20 and its attached fin 3 to rotate about the pitch axis AA

Figure 27

Shows a detail of the pitch and dihedral control mechanisms viewed from within the propeller hub 101 (not shown) in which the pitch angle is set to 90 degrees such that the dihedral axis BB is set transversely and the dihedral angle is set to 0 degrees.

The pitch angle is defined in this description as the angle between the root chord of a fin and the forward direction of axis CC. A dihedral shuttle 453 is free to slide along axis CC, its position being controlled by an actuator (not shown). Shuttle 453 comprises a plurality of trunnions 4531 preferentially equal to the number of turrets 20 fitted to propeller 1 (not shown). A dihedral link 13 is spherically pivoted to each of the trunnions 4531, the other end of which is attached to the inner end of each dihedral lever 241. A swing link 14 is preferentially spherically pivotally attached to the outer end of each of the trunnions 4531, its other end being spherically pivotally attached to abutments arranged internally within propeller hub 101 (not shown) by means of screw 141. Only one such set of links and levers is shown for clarity.

As the dihedral shuttle is moved along axis CC from a zero dihedral angle point P1, the shuttle will be rotated about axis CC by the influence of the swing links 14. When swing link 14 is rotated to point P2 the propulsor 1 will achieve its maximum dihedral angle. As shuttle 453 is further displaced under the action of the actuator to the point where fin 3 (not shown) is fully folded, swing link 14 will further rotate to point P3.

Figure 28

Shows a detail of the pitch and dihedral control mechanisms viewed from within the propeller hub 101 (not shown) in which the pitch angle is set to 90 degrees such that the dihedral axis BB is set transversely and the dihedral angle is set to 45 degrees. Preferentially for values higher than 45degrees the pitch should be maintained at 90 degrees and the fin should be considered to be folding rather than providing propulsive power.

Figure 29

Shows a detail of the pitch and dihedral control mechanisms viewed from within the propeller hub 101 (not shown) in which the pitch angle is set to 90 degrees such that the dihedral axis BB is set transversely and the fin is folded.

Figure 30

Shows a detail of the pitch and dihedral control mechanisms viewed from within the propeller hub 101 (not shown) in which the pitch angle is set to 40 degrees representing approximately the maximum forward pitch state and the dihedral angle is set to 0 degrees.

Figure 31

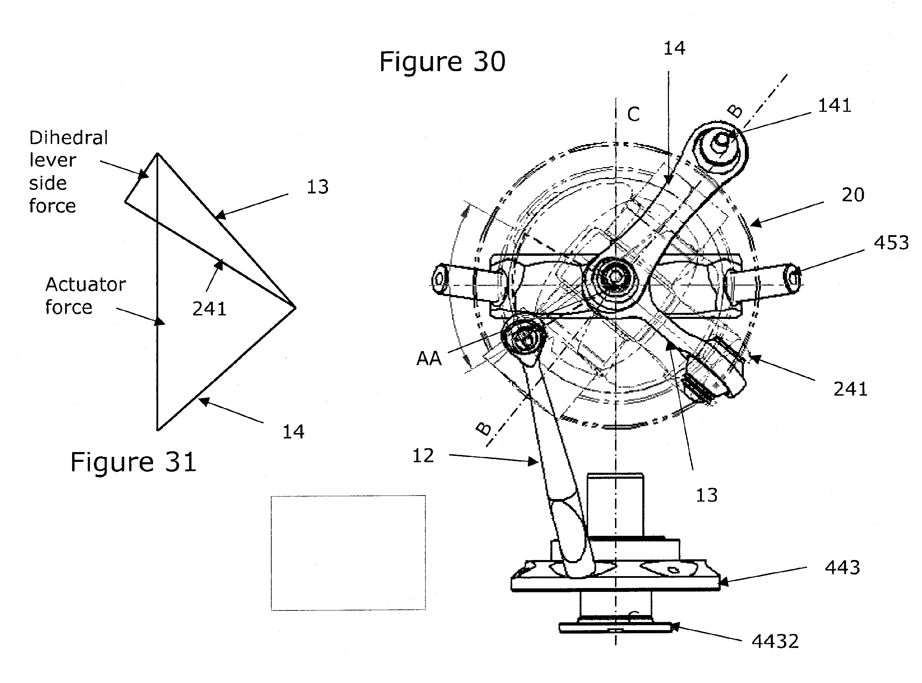

Shows a single dimensional force diagram for a case similar to that shown in Figure 30, but in which a small dihedral angle has been added. In this case the force 13 represents the in-plane force generated in the dihedral link 13, force 241 represents the in-plane force generated in the axis of the dihedral lever 241 and 14 represents the in-plane force generated in link 14.

The dihedral lever side force has to be reacted by the pitch moment applied. This is undesirable as it will increase or decrease the pitch moment. If it increases the pitch moment it will increase the size of the pitch actuator and the energy required to control pitch. If it detracts from the pitch moment it could cause reversal of the pitch moment casuing potential control problems and the potential for the pitch angle to swing to full reverse in case of a failure in the pitch contol function. This could result in a catastrophic failure.

It will be evident that by optimising the position in which the swing link 14 is attached to the propeller hub 101, the direction and magnitude of the dihedral lever side force can be optimised, particularly over the range of pitch angles where high thrust forces are generated.

Figure 32

Shows a rectangular envelope for the maximum extents of pitch and dihedral angles within a normal working range. A propulsor according to the present invention is designed to have a minimum pitch angle of 40 degrees, represent the maximum forward drive condition, and a maximum pitch angle of 97 degrees, representing the full reverse condition. The propulsor may also be design for a maximum working range of dihedral angles of 0 degrees to 45 degrees over which the full pitch angle range is required. For the range of dihedral angles of between 45 degrees and 90 degrees a propulsor may be considered to be folding, with 90 degrees being the fully folded condition. During folding it may be necessary to maintain the pitch angle at 90 degrees to avoid clashed in the pitch and dihedral mechanisms and to maintain the angles of the pivots within their design limits.

Figure 33

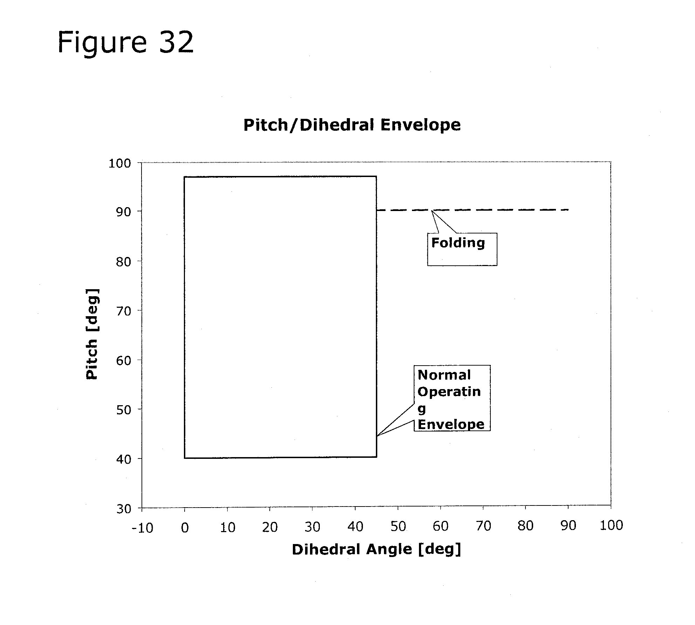

Shows a mechanism which is designed according to produce the envelope shape of Figure 32, in the condition shown fin 3 is in the fully folded position and the dihedral lever 241 is fully forward. Pitch is set to 90degrees. In this condition any change in the pitch angle would cause a change in the dihedral angle and would cause severe loading of the dihedral link joints 13.

Figure 34

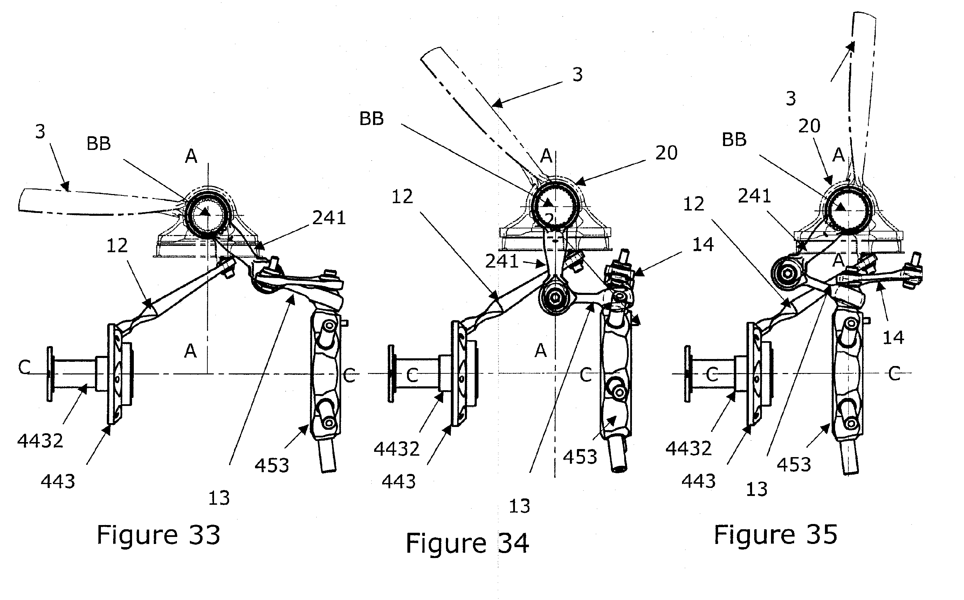

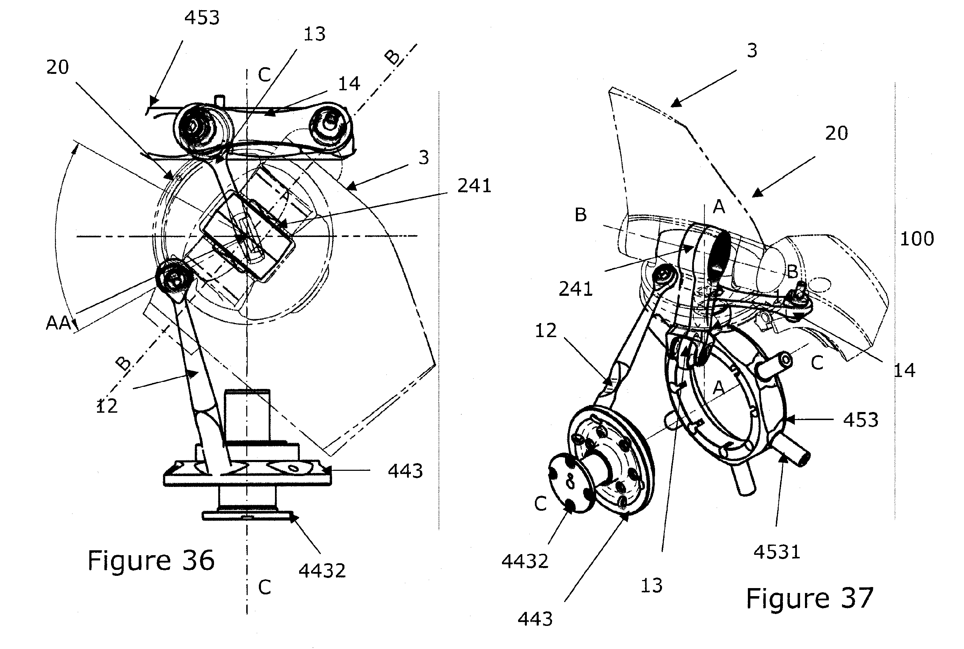

Shows the mechanism of Figure 33 set to the maximum design value of dihedral of 45 degrees and with pitch set to 90 degrees. In this condition the rear spherical joint of the dihedral link 13 is aligned on the pitch axis AA. Accordingly the pitch angle can be changed as desired with no effect on the dihedral angle.

Figure 35

Shows the mechanism of Figure 33 set to the minimum design value of dihedral of 0 degrees and with pitch set to 90 degrees. In this condition the forward spherical joint of the dihedral link 13 is aligned on the pitch axis AA. Accordingly the pitch angle can be changed as desired with no effect on the dihedral angle.

Figure 36

Shows the mechanism of Figure 33 set to the maximum design value of dihedral of 45 degrees and with pitch set to 40 degrees viewed from inside the hub. This drawing shows the rear spherical joint of the dihedral link 13 aligned on the pitch axis AA, enabling the pitch angle can be changed as desired with no effect on the dihedral angle.

Figure 37

Shows an isometric view under the same conditions as Figure 33. This view shows the swing link 14 anchored to the propeller hub 101 by screw 141

It will be appreciated that the fins, turrets and mechanisms including bearing arrangements, seals, yokes, links, etc. required for this sort of propeller require to be heavily tooled and produced in high volumes to ensure economic production costs together with high quality standards and low weight. Accordingly, the object of the current invention is to devise a propeller using a plurality of common components.

A wide variety of marine propellers are normally required to cover any particular band of power, boat speed and engine speed and this results in a major manufacturing and logistical problem. As a result larger propellers, in particular, are frequently manufactured to order with a consequent delivery delay.

Prior art propellers have usually consisted of a fixed number of blades integrally manufactured on a hub of cylindrical or swept section

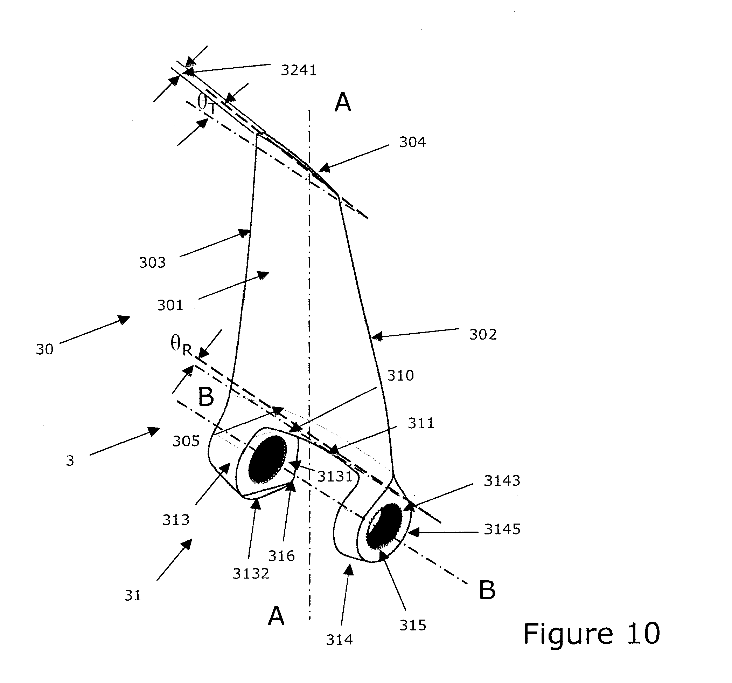

Prior art controllable pitch propellers for marine applications have generally been constructed as shown in Duncan (US6,332,818) Fig.10(b)

A propeller hub comprises a hub which may accept a number of blade turrets. The preferred number is between three and six, although in practice the number may vary from two upwards. This construction allows a six bladed propeller with common components to absorb approximately twice the power of a three bladed propeller with four and five bladed propellers being able to absorb intermediate power.

This construction also allows a single fin type to be used for a propeller size capable of transmitting between 50% and 100% of its design power with little variation in propulsive efficiency. As described in Patent Application EP [FIN] of equal date, propeller blades may be cut down from some maximum length such that even finer adjustment of the propeller to the power to be transmitted and the performance required may be achieved.

In this construction the only components which change for the power band above are the hub and the pitch and dihedral shuttles. All other components and assemblies are common.

The hub may be manufactured as a casting or moulding from modular tooling.

This approach allows a propeller which is closely matched to the hull performance and engine characteristics to be made up from a small number of standard components which can be stocked thus cutting down lead times from weeks or months to hours.

For instance, this construction requires the following part numbers and tools to cover a power band multiplier of 16 (say from 100hp to 1600hp):

|  | New Application | | Prior Art | |
|---|---|---|---|---|
|  | RH | LH | RH | LH |
| Forgings & tools (Fins) | 5 | 5 | | |
| Patterns | 20 | | 300 | 300 |
| Total tools | 25 | 5 | 300 | 300 |
| Fin part numbers | 15 | 15 | | |
| Hub moulds/casting part numbers | 4 | | | |
| Propeller Part numbers (Single & Dual propellers including different materials) | 19 | 15 | 600 | 600 |

Figure 38

Shows an isometric of a modular hub 101 for a propeller having controllable pitch and/or controllable dihedral, rake, swash or tilt.

Hub 101 comprises a forward casing 1012 and an aft casing 1011 each comprising scalloped features 1015, and are bolted together by through-bolts 1013. Plugs 1014 are sealed into the forward casing 1012 to prevent tampering and corrosion. Scallops 105 are featured to trap and retain a plurality of turret assemblies 120 (not shown)

Figure 39

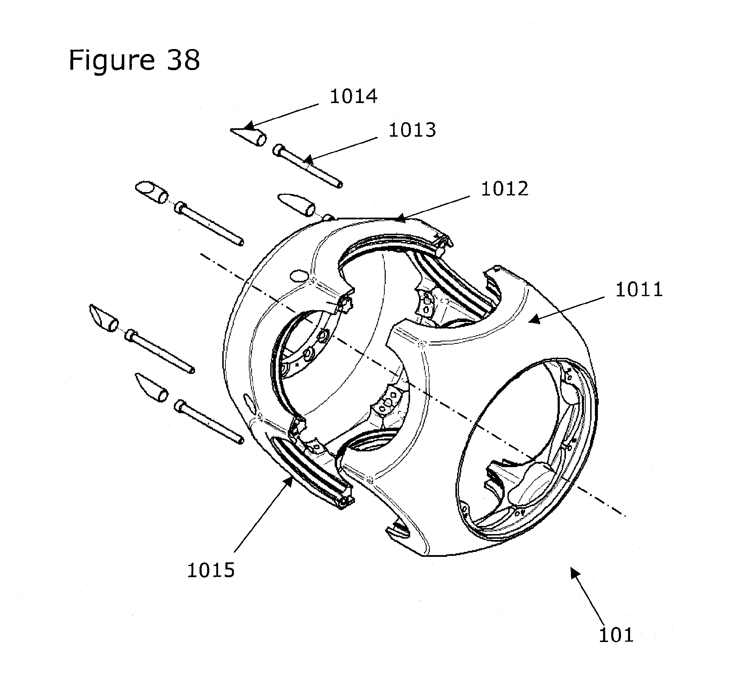

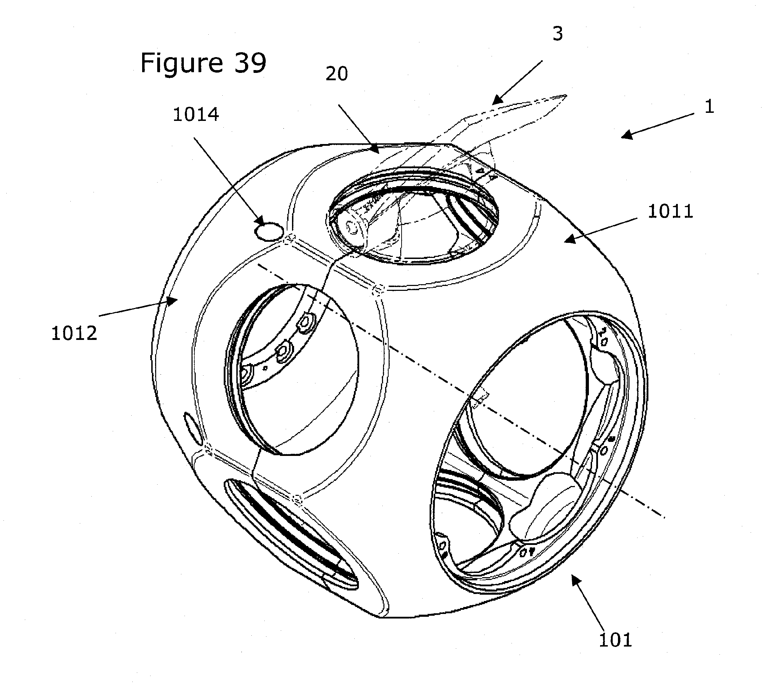

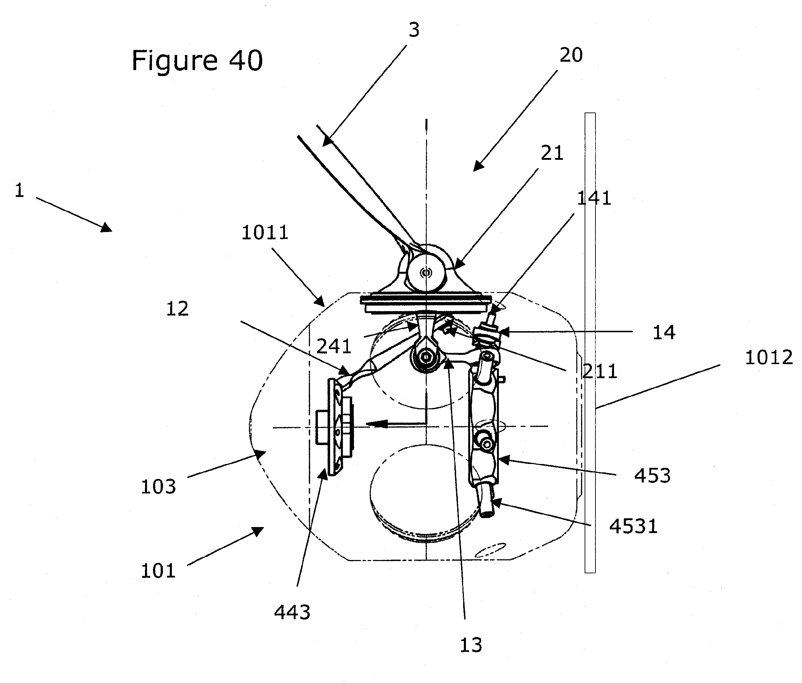

Shows an isometric of a the modular hub of Figure 38 after bolting. A single fin and turret assembly 20 is shown fitted in place during the bolting process.

Figure 40

Shows a side view of a six fin propeller 1 comprising a modular hub 101. The propeller is shown with a single fin 3 and turret assembly 20 fitted for clarity. The fully assembled propeller comprises 6 fins 3 and turret assemblies 20, 6 pitch links 12, dihedral links 13 and swing links 14. The pitch links 12 are bolted to a pitch shuttle 443 at one end and are spherically pivoted to pin 211 of yoke 21 at the other end. The dihedral links 13 are spherically pivoted to a dihedral lever 241 at one end and to trunnion 4531 of a dihedral shuttle 453 at the other. The swing link 14 is spherically pivoted at one end to the outer end of a trunnion 4541 of the dihedral shuttle 453 and at the other end to a pin 141 fixed to the forward hub casing 1012.

Figure 41

Shows an isometric view of a four fin propeller 1 comprising a modular hub 101, a cover 103, fours fins 3 and turret assemblies 20.

Figure 42

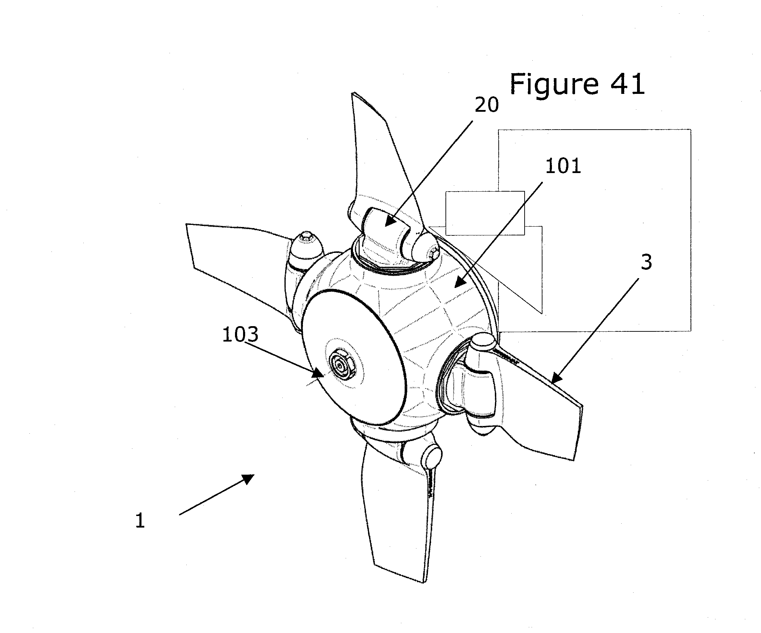

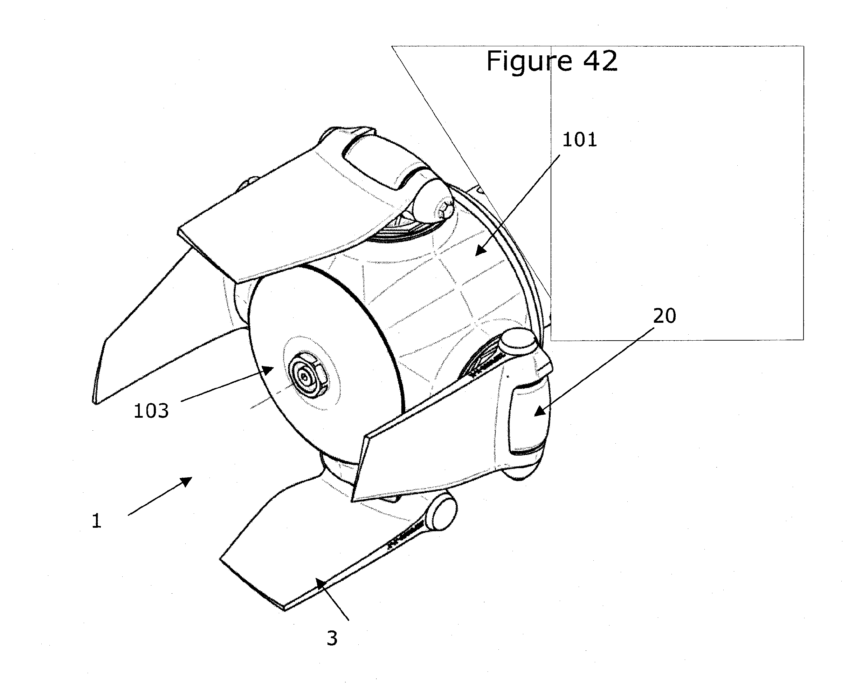

Shows an isometric view of a four fin propeller of figure 41 with the fins 3 in a folded position.

LOW CHURNING PROPELLER HUB

In particular surface piercing propellers arranged for controllable pitch have been designed with an essentially cylindrical hub of large diameter. Such a hub is claimed in Eriksson EP1280694 (US2003157849). Duncan US6332818 disclosed a large diameter hub with a swept profiled surface.

The hubs of propellers of this Art tend to be wholly or substantially immersed when the hull to which they are fitted is at rest or is travelling at displacement speeds.

Under theses conditions it has been found that the propeller hub creates substantial churning losses such that the power required to overcome said churning losses result in a significant reduction in propulsive efficiency.

The churning losses are proportional to the following factors:

$(R\Omega)^2$ = The square of the speed of any part of any surface in contact with the water, and,

A = The surface area of any surface in contact with the water at a radius of R from the rotational axis, and,

$Cd_f$ = the friction drag coefficient of any surface A in contact with the water, and,

Cd = the drag coefficient due to the form of any surface A in contact with the water.

The total churning power ($P_c$) is given by the expression below:

$$Pc = \sum(R \times \Omega \times (R \times \Omega)^2 \times A \times (Cd_f + Cd)) = \sum(R^3 \times \Omega^3 \times A \times (Cd_f + Cd))$$

From which it is evident that to minimise churning and the consequent power loss during low-speed operation the following requirements should be met:

The rotational speed $\Omega$ should be kept as low as possible, and,

The area A of any surface in contact with the water should be kept as low as possible and the radius R at which any such surface area is arranged from the axis of rotation should be minimised, and,

The form drag coefficient Cd and the friction drag coefficient $Cd_f$ should be kept as low as possible.

Figure 43

Shows the rear view of a craft fitted with dual propulsors 1 each with three fins 3. The craft is travelling at sufficient speed for the transom cavity to be fully developed. Thus the hubs 101, turrets 20 and the roots of fins 3 operating in the transom cavity such that they are not immersed. At lower speeds the hubs and turrets would be immersed. Although the diameter of the hubs 101 is small and they consequently would not add very significantly to the churning losses, the turrets 20 have a relatively large diameter and a bluff form. Their mean square radius is also significantly larger and the churning losses generated by such a form would be high.

Figure 44

Shows a rear view of an improved hub 101 for a surface-piercing propeller 1 having a broadly polygonal shape at larger swept diameters blending into a generally swept surface at smaller radii. The polygonal surfaces create partial cavities as they rotate such that only a small part of the surface of the propeller hub is in contact with the water. As a consequence the churning losses generated by this improved hub form are much improved. The root sections of the fins 3 blend into the turret profiles. Due to their generally smooth form they generate only modest churning and the losses are further reduced by the fact that they do not create a continuous ring such that each will tend to operate in the cavity created by its predecessors.

Figure 45

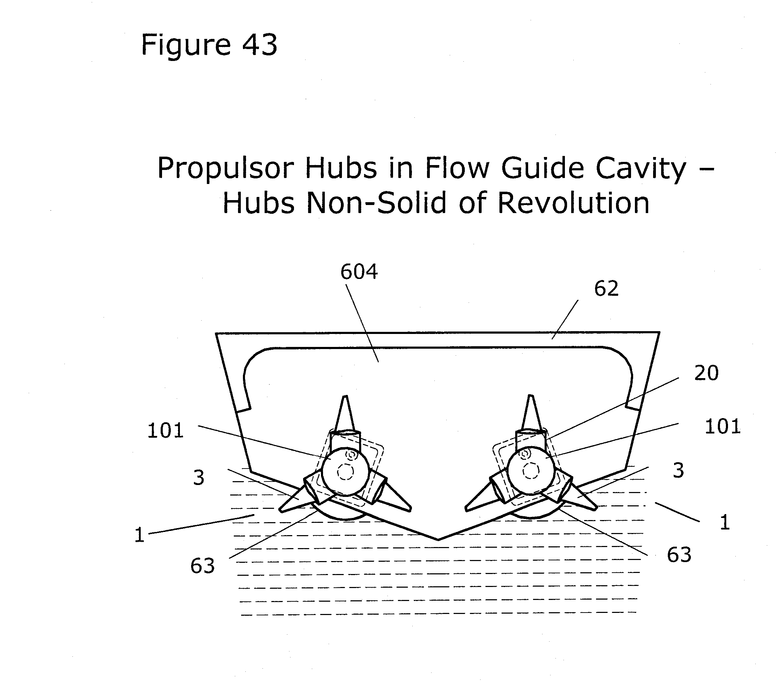

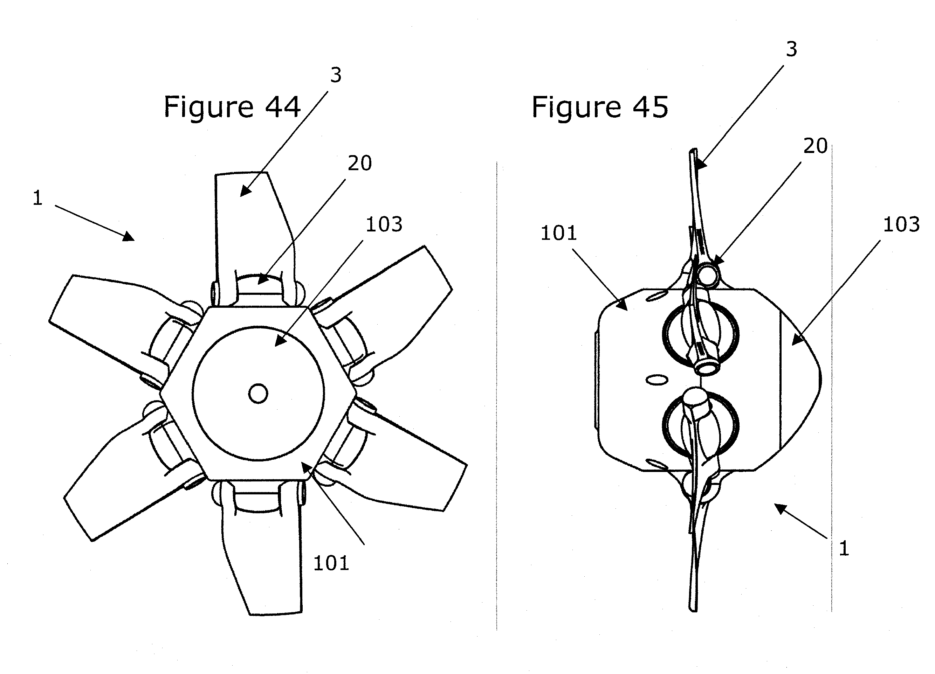

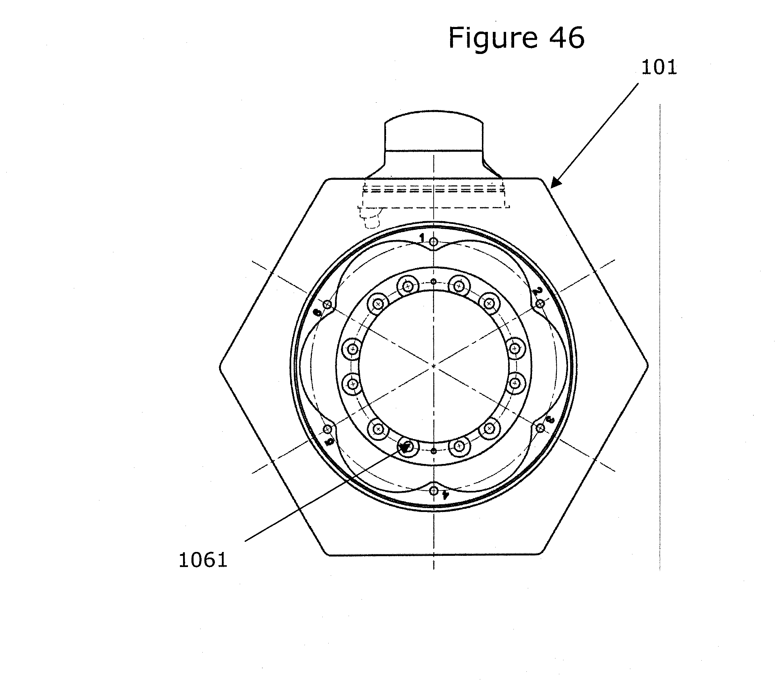

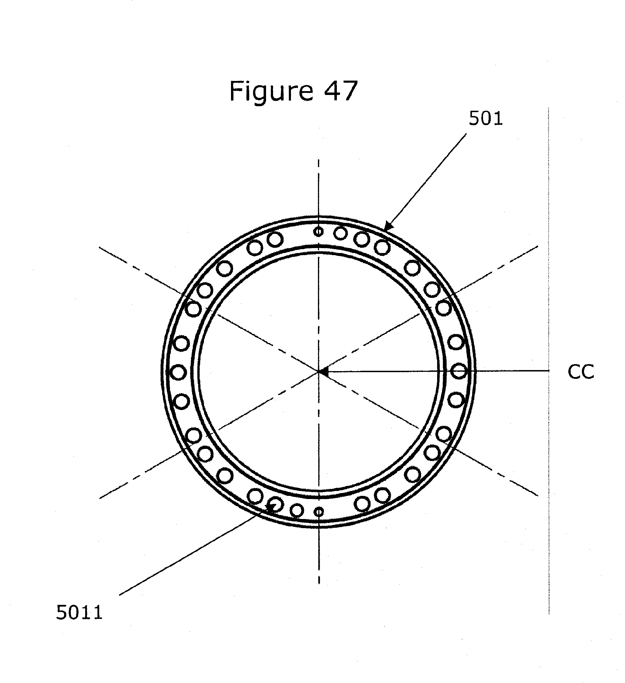

Shows a side view of the improved hub of figure 43 from which it is evident that the root sections of fins 3 and the profiles of turrets 20 present a small cross sectional area of non-continuous section.

Figure 46

Shows a view from the rear of hub 101 showing a preferred bolting pattern to the propeller shaft (not shown). This bolting pattern allows is reduced to 5 pairs of bolts for a 5 fin propeller, etc.

Figure 47

Shows a rear view of a propeller shaft 501 which had a series of tapped holes allowing 3, 4, 5, or 6 fin propellers to be fitted to a shaft.

Figure 50

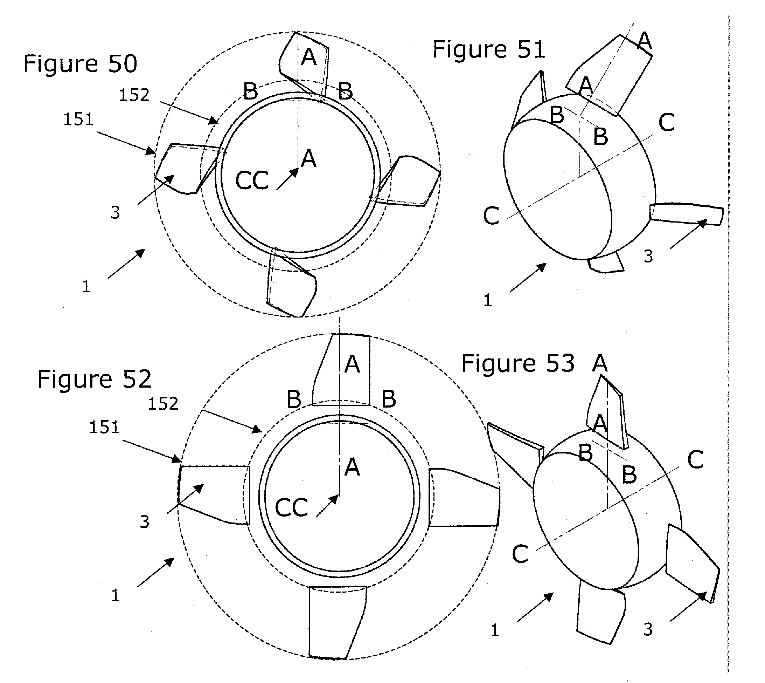

Figure 50 shows a front view of a propeller 1 comprising four fins 3, each of which may be raked about an axis BB in the plane of the propeller and pitched about an axis AA. The propeller tips rotate through circle 151, the propeller roots rotate through circle 152. Fins 3 are pitched at an angle of 45 degrees about axis AA and raked by angle of 30 degrees about axis BB

It will be noted that at both the tip and the root sections of fins 3 the leading and trailing edges describe different circles as they rotate about axis CC. This means that the flow through the propeller at any particular point does not follow a design section. This has a number major disadvantages:

Due to the twist along the span of a fin as shown in Figure 10, the curvature of the fin section seen by the flow will be less curved or more curved depending on whether the rake angle is more or less than the design figure.

An increase in curvature results in an increased lift coefficient as shown in Figure 140. This in turn means that maintaining the correct torque requirement will require that the pitch is reduced which may result in the leading edge operating at negative incidence which would tend to swap the cavity to the other side of the fin. This would result in an unstable flow pattern and could cause hunting of the propulsion controls or the engine controller or both.

A decrease in curvature would result in a reduction in the lift coefficient which would require an increase in the leading edge incidence. However, this might not be sufficient to prevent the flow breaking away near the trailing edge, this could result in local cavitation.

Additionally, it will be clear from looking at the drawing that the flow around the root and tip sections would be perturbed. This would result in a significant loss of performance.

Figure 51

Figure 51 is an isometric view the propeller of Figure 50

Figure 52

Figure 52 shows the propeller of Figure 50 operating at 0 degrees of Rake and 90 degrees of pitch. If the propeller and fins are designed for 0 degrees of rake the un-raked propeller operates normally.

Figure 53

Figure 53 is an isometric view the propeller of Figure 52

Figure 54

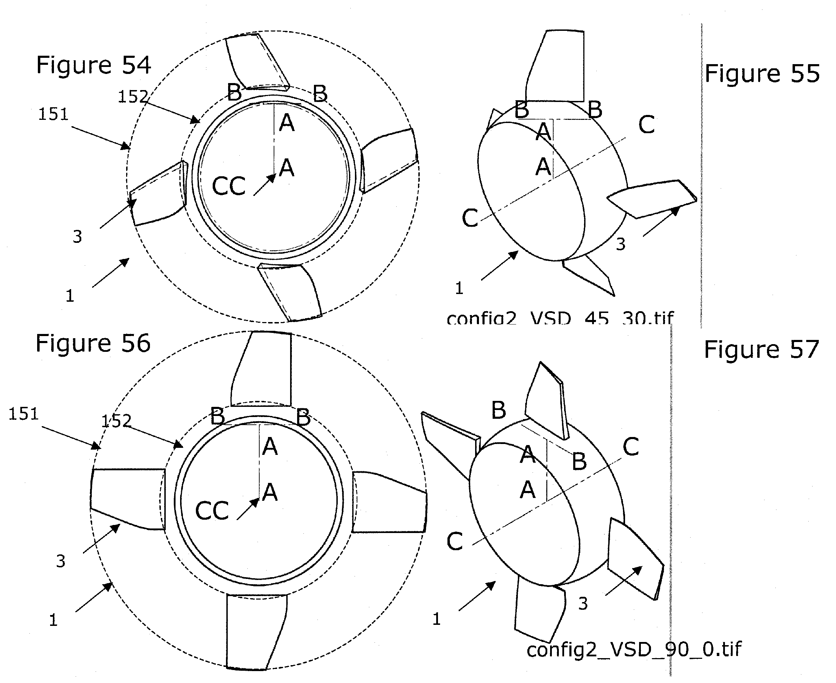

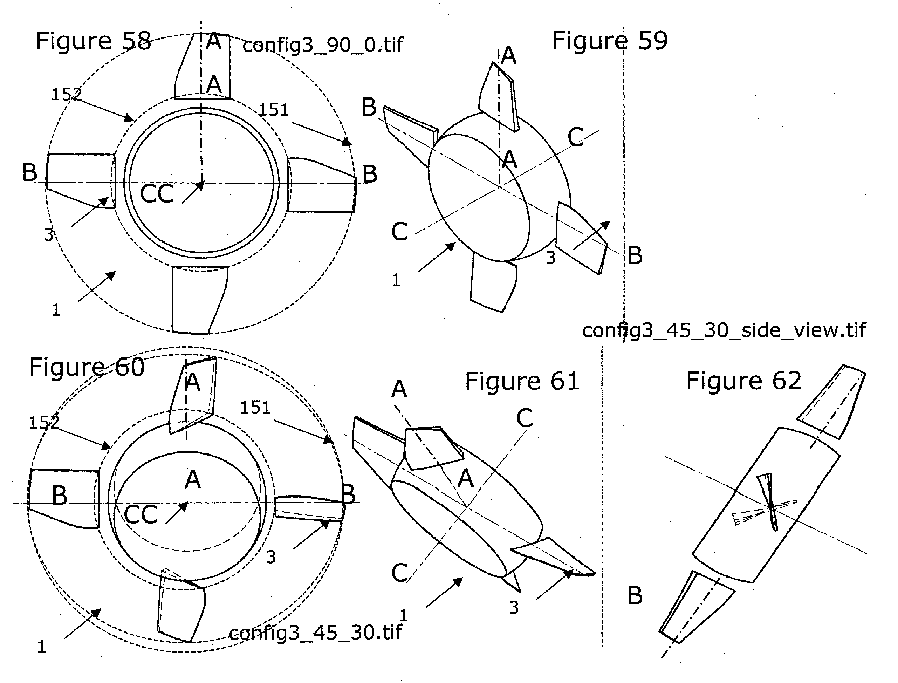

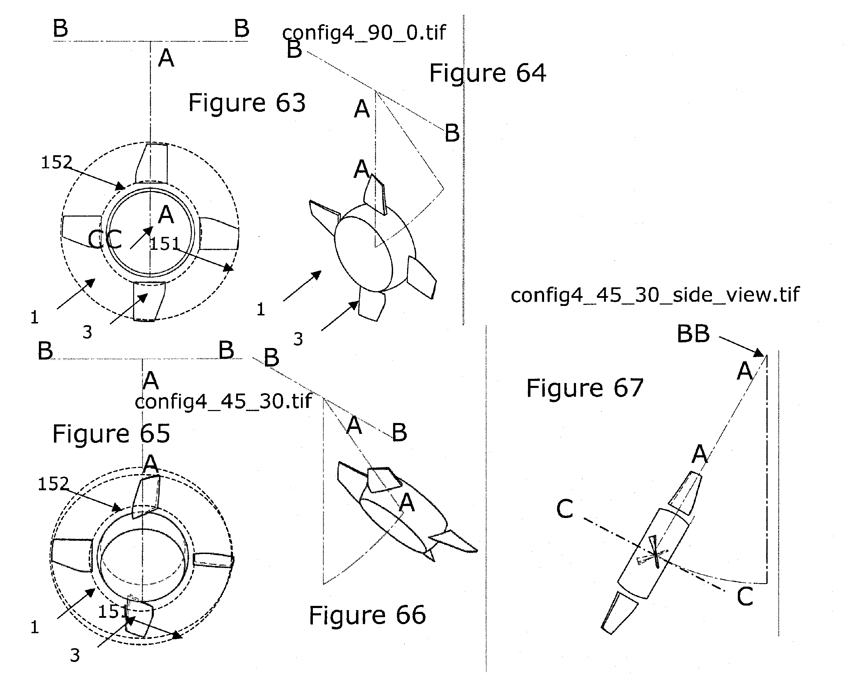

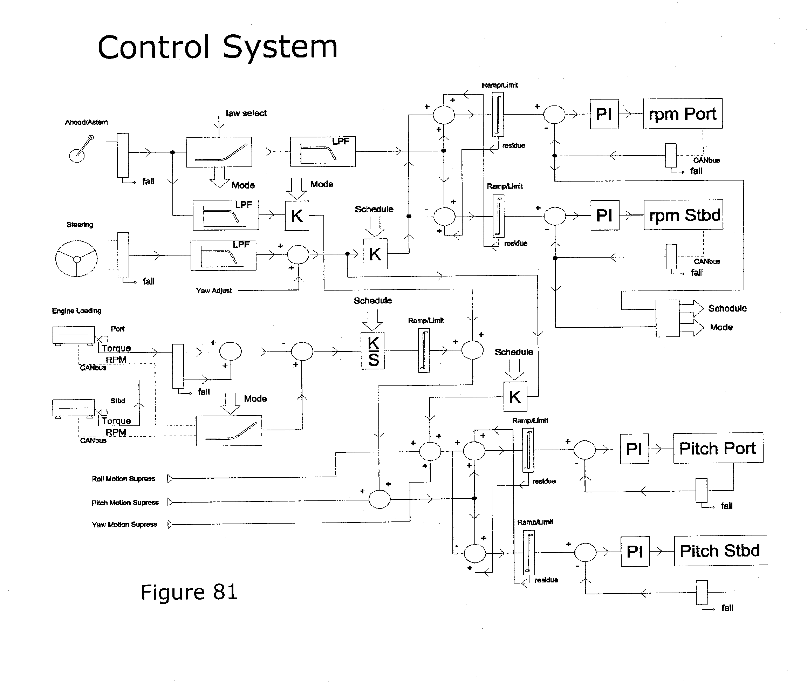

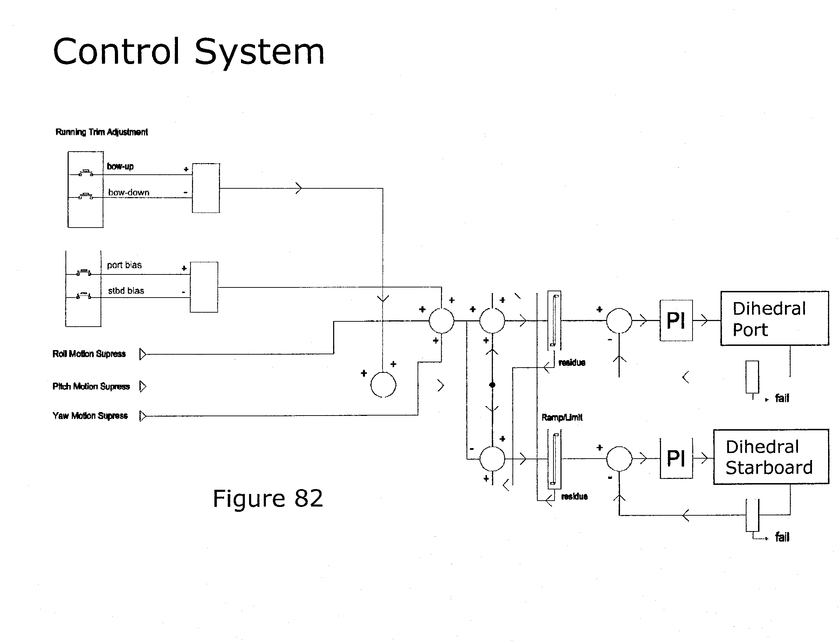

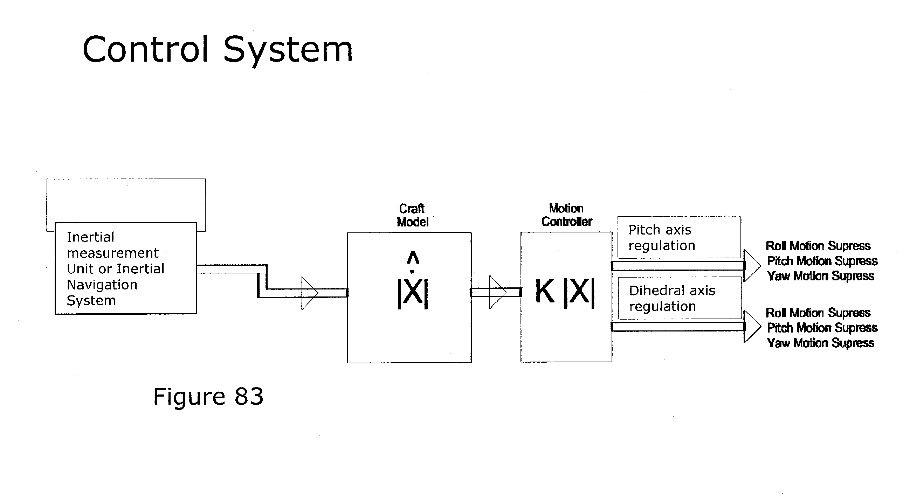

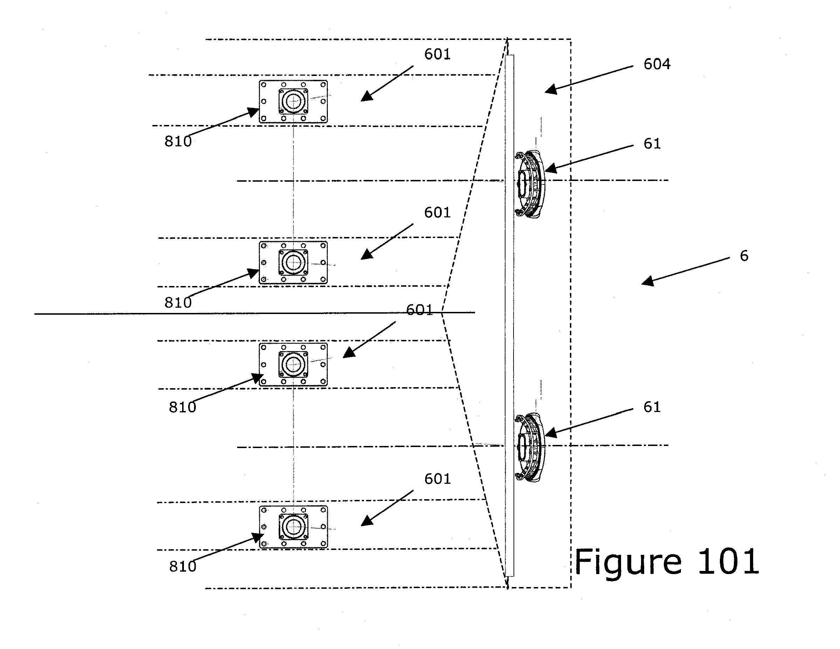

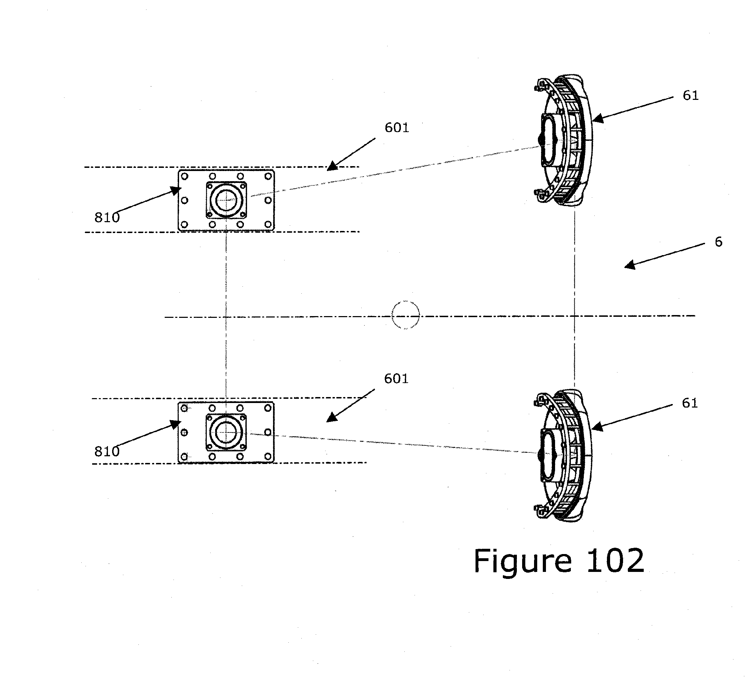

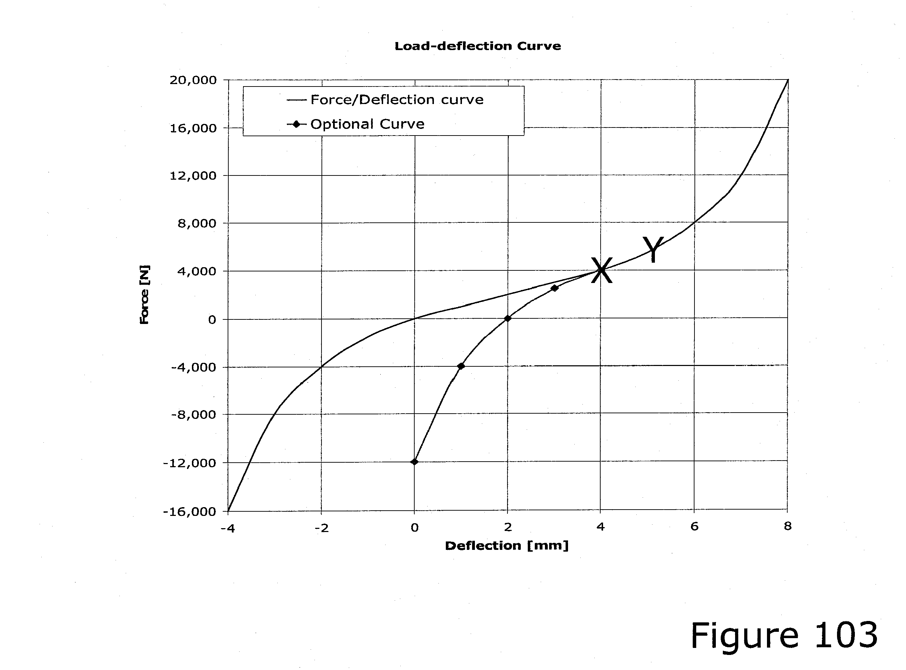

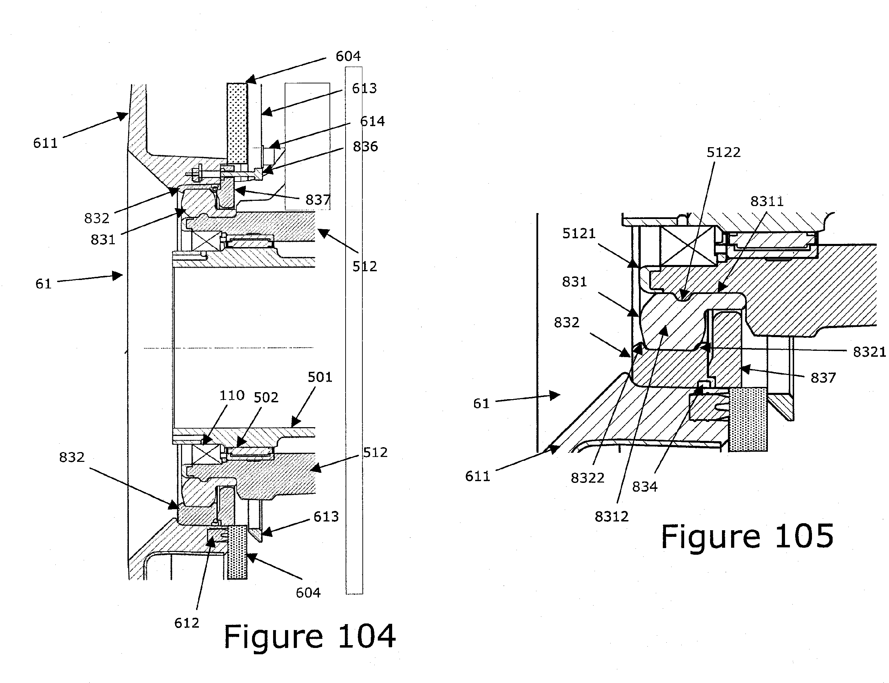

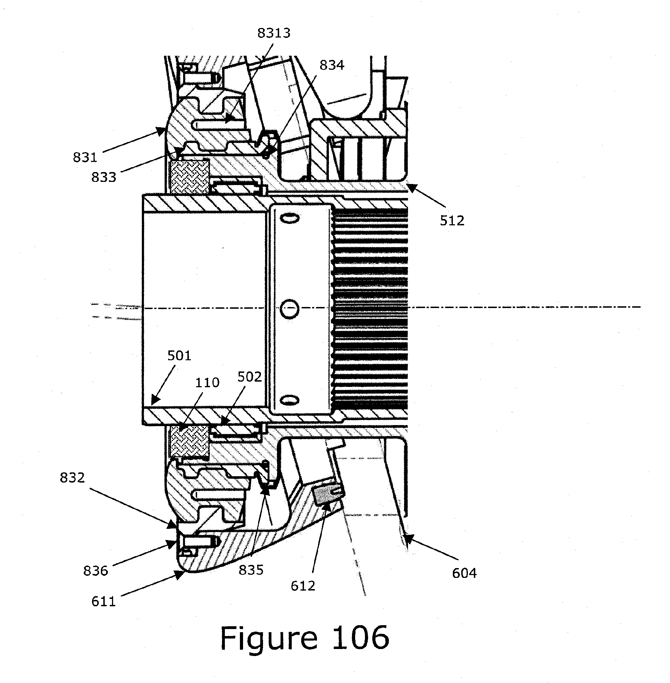

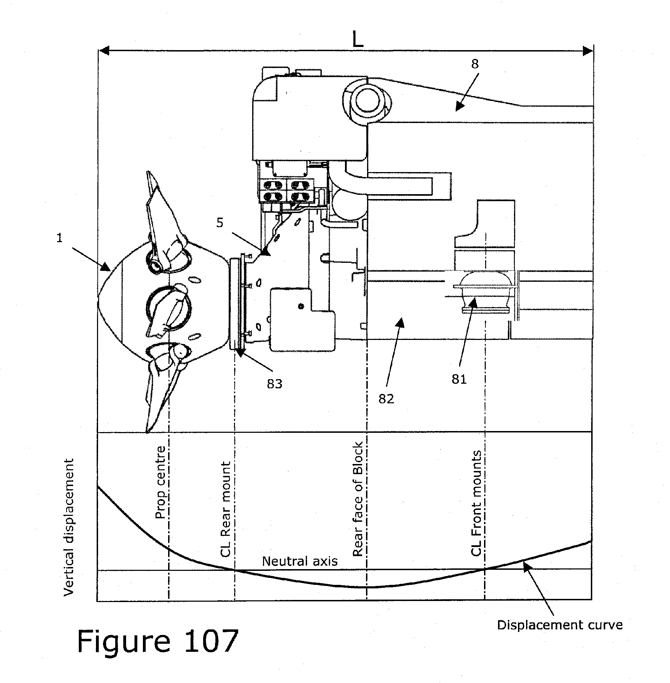

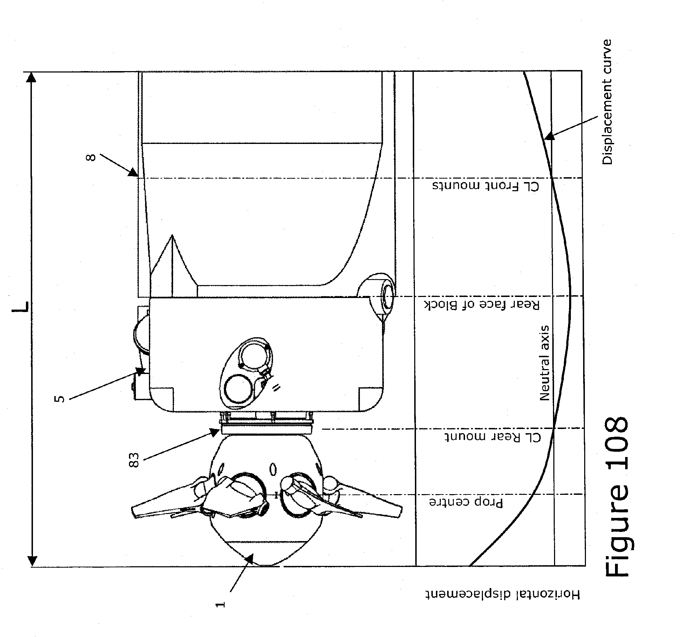

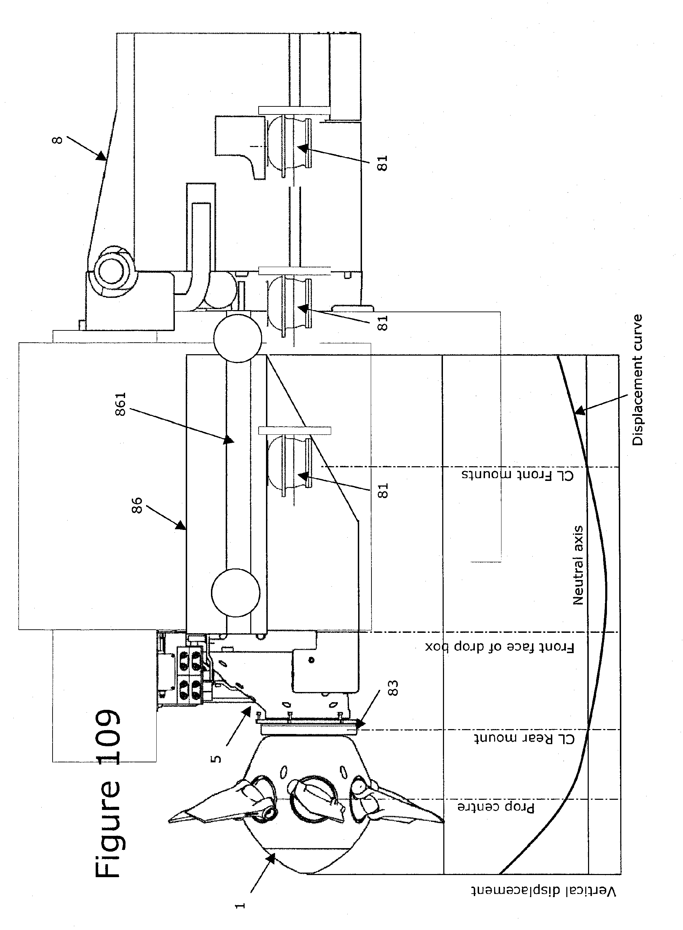

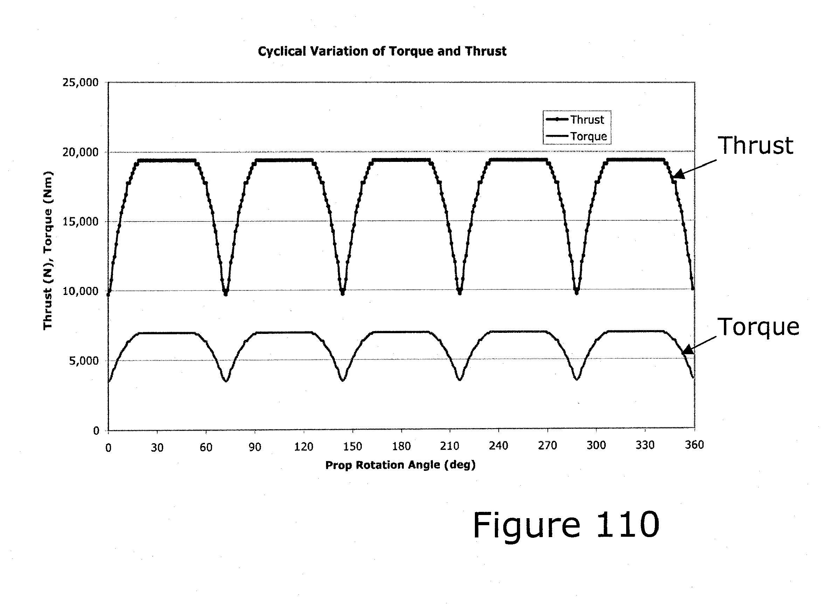

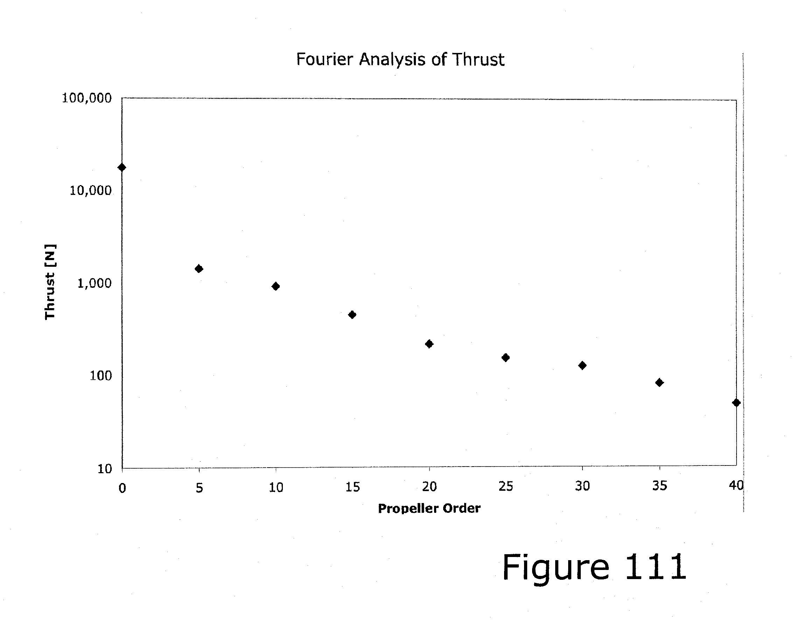

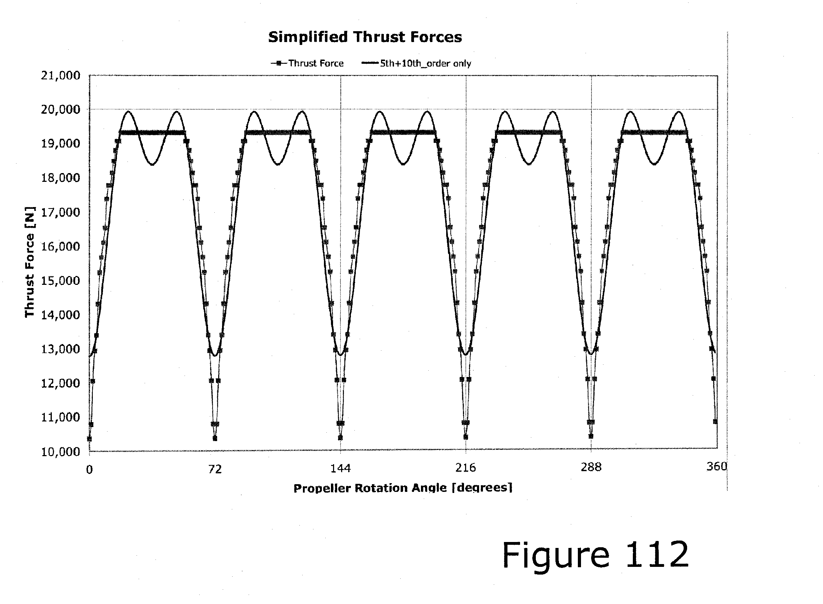

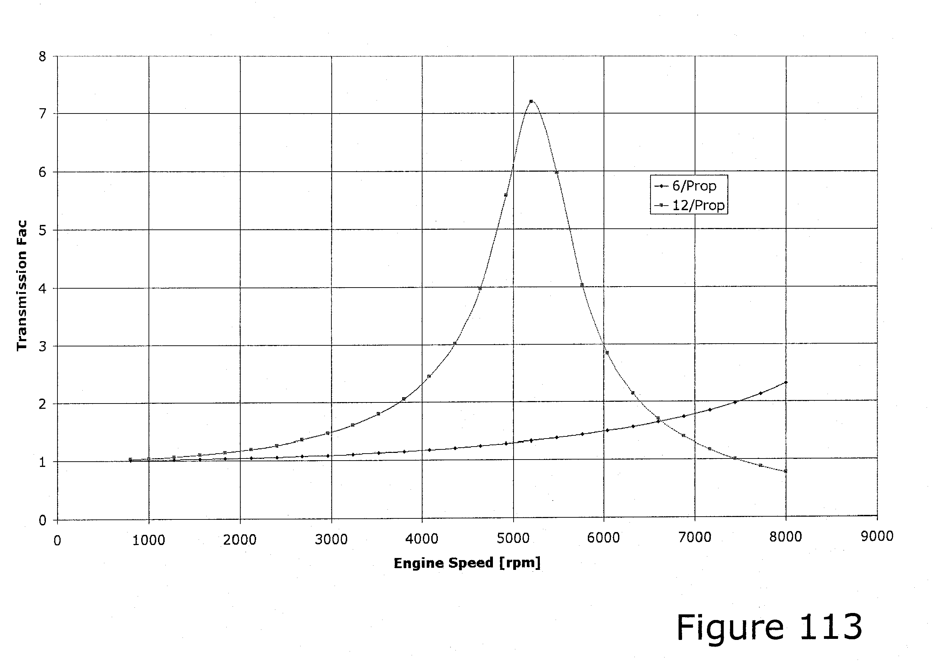

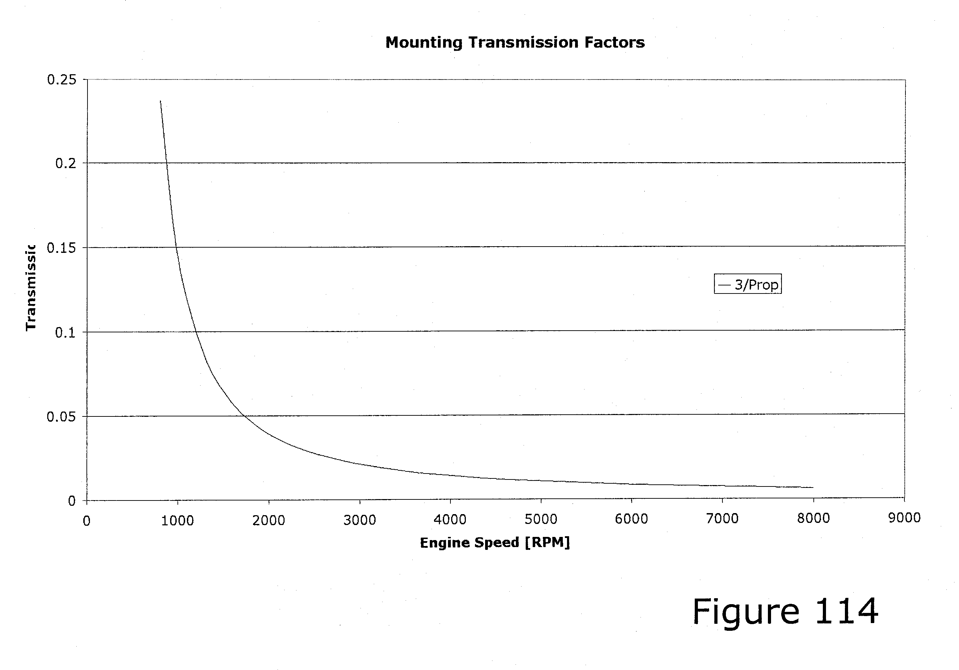

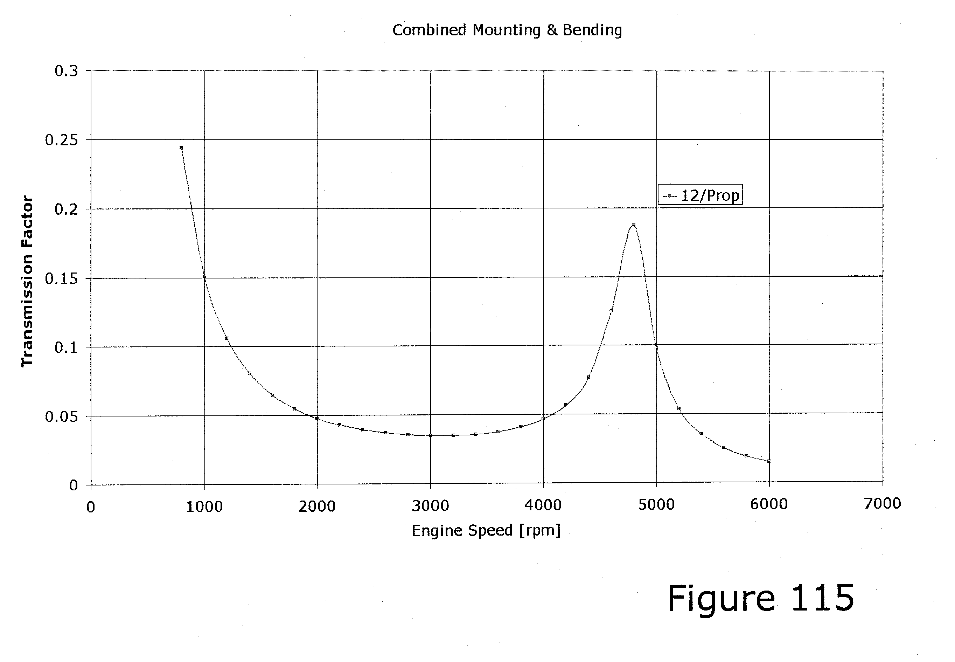

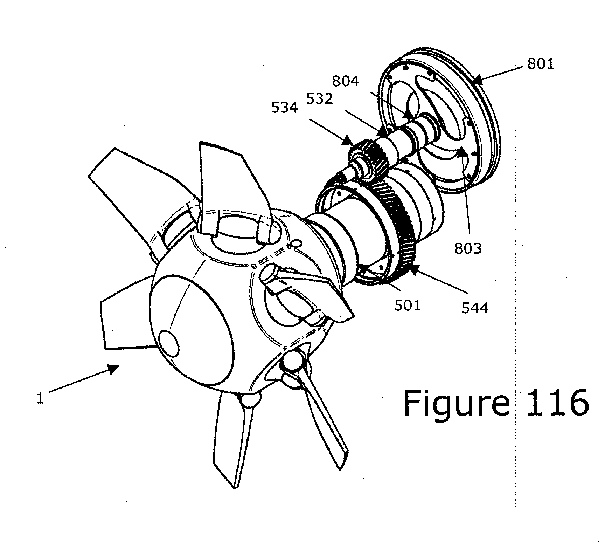

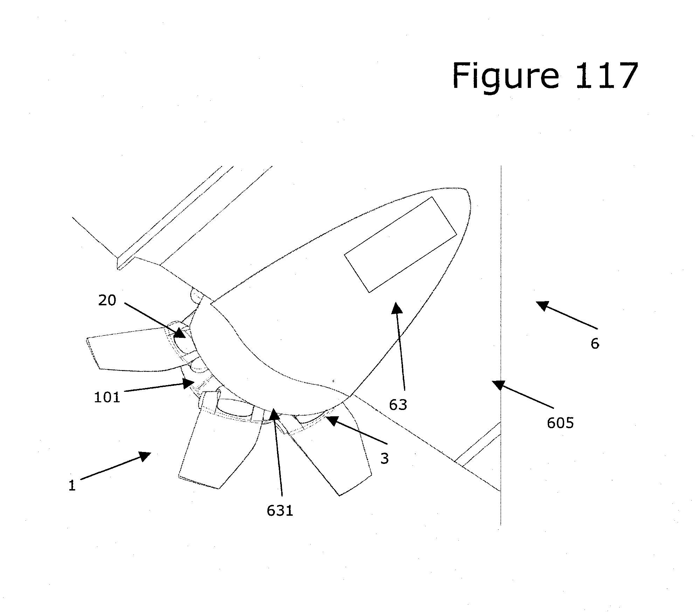

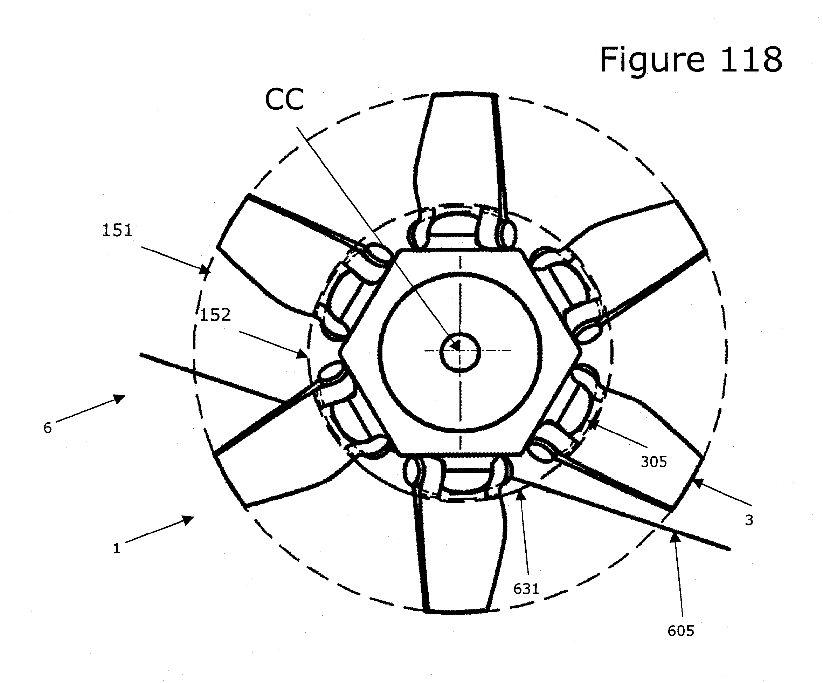

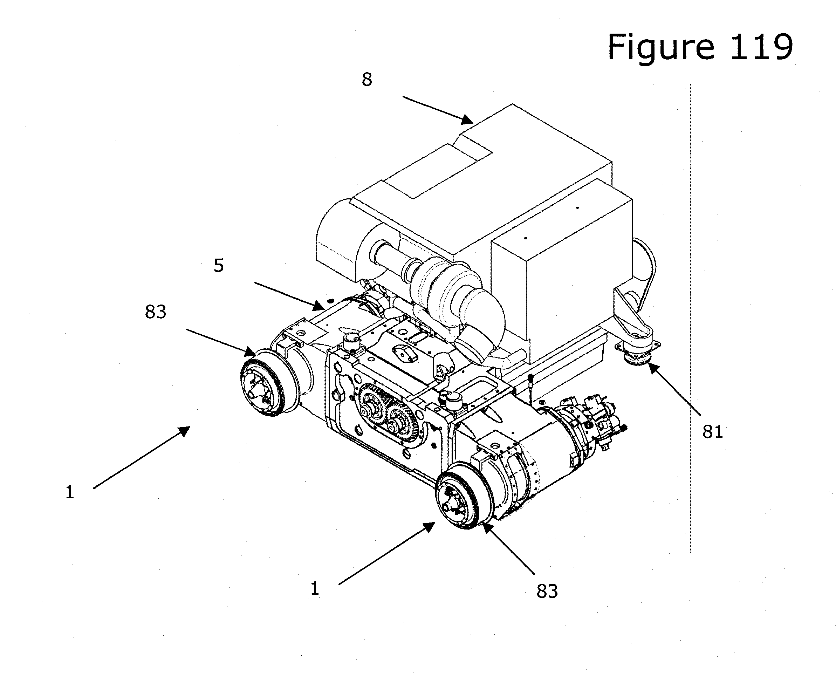

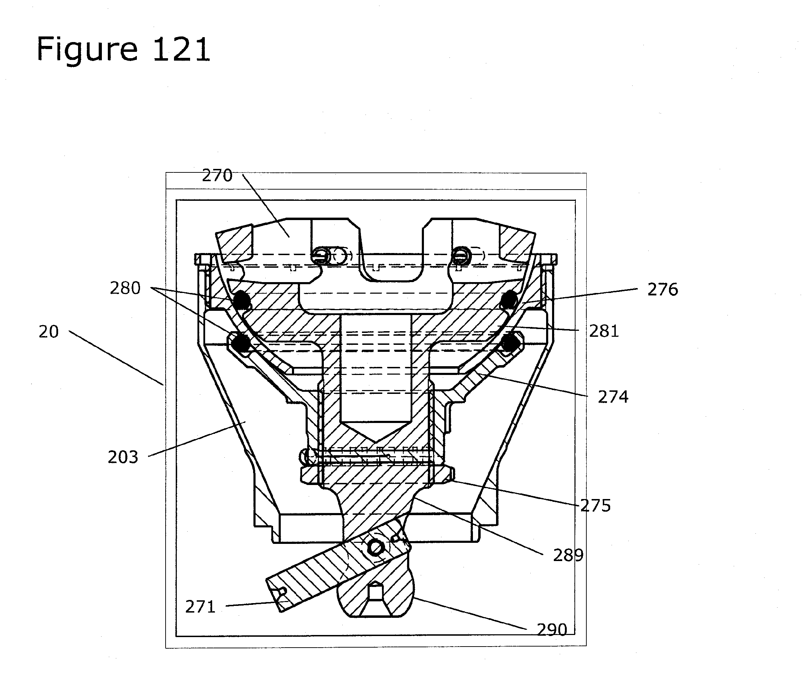

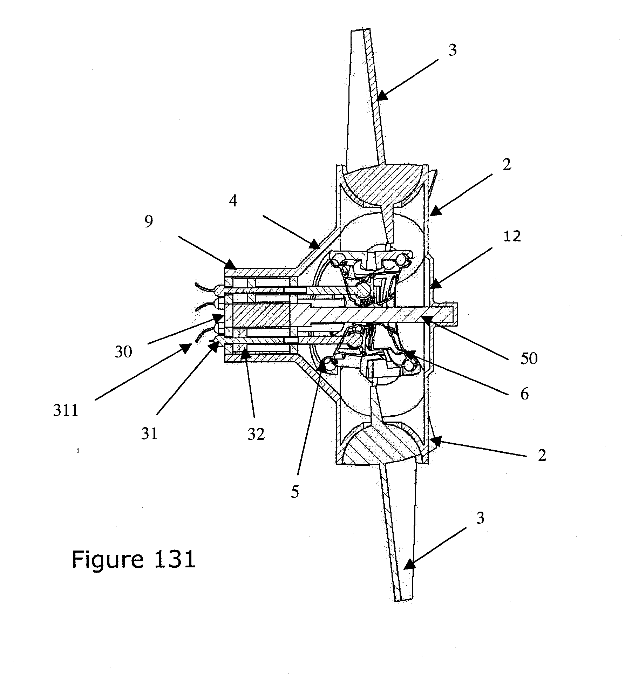

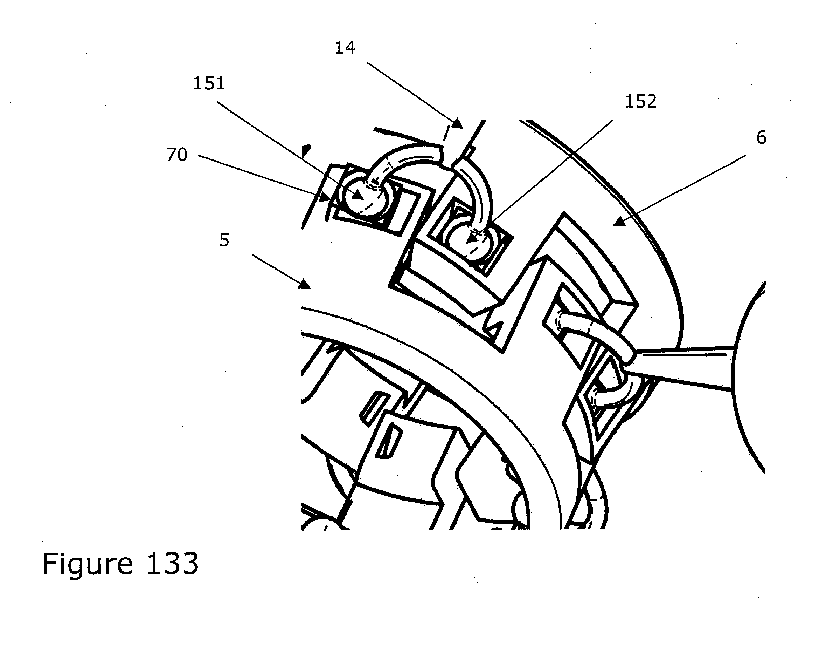

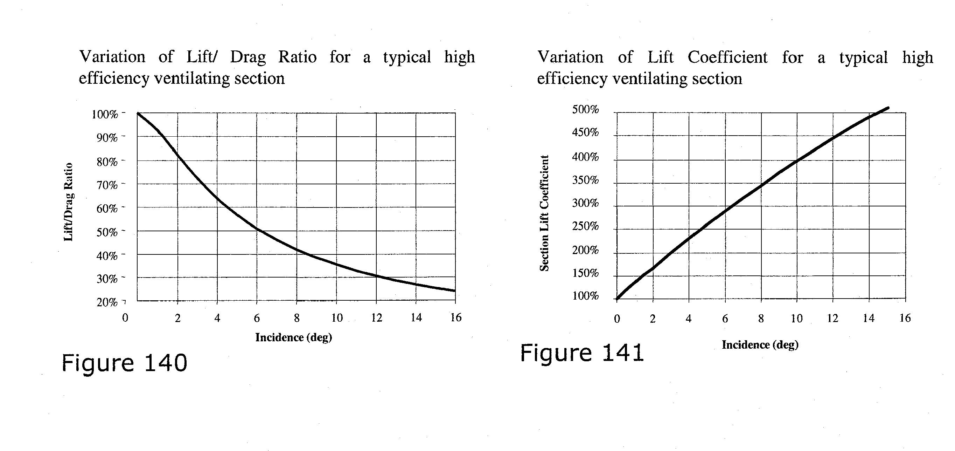

Figure 54 shows a front view of a propeller 1 comprising four fins 3, the dihedral angle of which may be varied about an axis BB generally parallel to the root of each fin. The pitch of each fin may be varied by rotation about an axis AA. The propeller tips rotate through circle 151, the propeller roots rotate through circle 152. Fins 3 are pitched at an angle of 45 degrees about axis AA and given a dihedral angle of 30 degrees about axis BB

It will be evident from this drawing that unlike in the case of rake the both the leading and the trailing edges of the fins sweep closely around circle 151 at the tip and circle 152 at the root. This results in the flow at any radius following a design section such that there are no significant additional losses.

Figure 55

Figure 55 is an isometric view the propeller of Figure 54

Figure 56

Figure 56 shows a front view of a propeller 1 with the same configuration as that of figures 54 and 55. Fins 3 are pitched at an angle of 90 degrees about axis AA and given a dihedral angle of 0 degrees about axis BB

As for the propeller of Figure 54 the flow remains aligned with the design sections.

Figure 57

Figure 57 is an isometric view the propeller of Figure 56

Figure 58

Figure 58 shows a front view of a propeller 1 comprising four fins 3, the swash angle of the propeller may be varied about an axis BB which passes through the axis CC and is normal to said axis. The pitch of each fin may be varied by rotation about an axis AA. The propeller tips rotate through circle 151, the propeller roots rotate through circle 152. Fins 3 are pitched at an angle of 90 degrees about axis AA and the propeller has a swash angle of 0 degrees about axis BB

It will be evident from this drawing that both the leading and the trailing edges of the fins sweep closely around circle 151 at the tip and circle 152 at the root. This results in the flow at any radius following a design section such that there are no significant additional losses.

Figure 59

Figure 59 is an isometric view the propeller of Figure 58

Figure 60

Figure 60 shows a front view of a propeller 1 of the same configuration as Figure 58. The propeller tips rotate through circle 151, the propeller roots rotate through circle 152. Fins 3 are pitched at an angle of 45 degrees about axis AA and the propeller has a swash angle of 30 degrees about axis BB

It will be evident from this drawing that both the leading and the trailing edges of the fins do not sweep closely around circle 151 at the tip and circle 152 at the root, other than when the fins are aligned with axis BB. Not only do the fins become angled to the flow under other conditions, but they sweep an elliptical trajectory. This results in the flow at any radius failing to follow a design section such that there will be significant additional losses.

Figure 61

Figure 61 is an isometric view the propeller of Figure 60

Figure 62

Figure 62 shows a side view of a propeller 1 of the same configuration as Figure 60 from which it will be evident that there will be a large difference in the pitch angle as the propeller rotates. This would have a very negative influence on performance.

Figure 141 shows incidence changes up to 15 degrees resulting in a change of lift coefficient of 400%. Figure 140 shows a corresponding reduction in the lift/drag ratio to just 22% of its design value, at 30degrees of swash angle the variation in pitch from one side to the other would be +/- 30 degrees. The resulting large thrust reversal from side to side would result in a very large performance loss, high levels of vibration and a large moment on the craft.

The combined effects shown in Figures 60 and 62 make this an unacceptable option.

Figure 63

Figure 53 shows a front view of a propeller 1 comprising four fins 3, the tilt angle of the propeller may be varied about an axis BB normal to axis CC. The pitch of each fin may be varied by rotation about an axis AA. The propeller tips rotate through circle 151, the propeller roots rotate through circle 152. Fins 3 are pitched at an angle of 90 degrees about axis AA and the propeller has a swash angle of 0 degrees about axis BB

It will be evident from this drawing that both the leading and the trailing edges of the fins sweep closely around circle 151 at the tip and circle 152 at the root. This results in the flow at any radius following a design section such that there are no significant additional losses.

Figure 64

Figure 64 is an isometric view the propeller of Figure 63

Figure 65

Figure 65 shows a front view of a propeller 1 of the same configuration as Figure 63. The propeller tips should ideally rotate through circle 151, the propeller roots rotate should ideally rotate through circle 152. Fins 3 are pitched at an angle of 45 degrees about axis AA and the propeller has a tilt angle of 30 degrees about axis BB

It will be evident from this drawing that the both the leading and the trailing edges of the fins do not sweep closely around circle 151 at the tip and circle 151 at the root, other than when the fins are aligned with axis BB. Not only do the fins become angled to the flow under other conditions, but they sweep an elliptical trajectory. This results in the flow at any radius failing to follow a design section such that there will be significant additional losses.

Figure 66

Figure 66 is an isometric view the propeller of Figure 65

Figure 67

Figure 67 shows a side view of a propeller 1 of the same configuration as Figure 65 from which it will be evident that there will be a large difference in the pitch angle as the propeller rotates. This would have a very negative influence on performance.

Figure 141 shows incidence changes up to 15 degrees resulting in a change of lift coefficient of 400%. Figure 140 shows a corresponding reduction in the lift/drag ratio to just 22% of its design value, At 30degrees of tilt angle the variation in pitch from one side to the other would be +/- 30 degrees. The resulting large trhust reversal from side to side would result in a very large performance loss, high levels of vibration and a large moment on the craft.

The combined effects shown in Figures 65 and 67 make this a an unacceptable option.

Figure 81

Figure 81 shows a control block schematic to change port and starboard pitch and engine speed in response to the pilot's movement of an ahead/astern variable control and a helm. And in response to craft roll, pitch and yaw sensors rate sensors or from appriate signals from and inertial measurement unit or an inertial navigation system.

In this embodiment the engine load is constrained to values determined by the engine speed set points or the actual engine speeds.

Figure 82

Figure 82 shown a control block schematic to control the port and starboard dihedral angle according to the errors in boat running trim and the motion of the craft in yaw, oitch and roll.

Figure 83 is a control block schematic to output signals to the pitch and dihedral controllers based on craft motion determined by an Inertial measurement unit or an inertial navigation system

Figure 101

Figure 101 shows a ghosted partial hull prepared for the installation of dual engines and propulsors. On either side of the hull a pair of front mounts 810 are attached to stringers 601 forming part of the hull structure 6, and a rear mount 61 is attached to a transom 604 also forming part of said hull structure. The front mounts 810 are arranged to take axial and lateral loads in addition to vertical loads. The rear mounts 61 are arranged predominantly to take vertical and lateral loads and to be compliant in the axial sense.

It will be evident that additional sets of front and rear mounts could be positioned to accommodate additional engine/propulsor units.

Figure 102

Figure 102 shows a ghosted partial hull prepared for the installation of a single engine/dual propulsor unit. A pair of front mounts 810 are attached to stringers 601 on either side of the hull forming part of the hull structure 6, and a rear mounts 61 are attached to a transom 604 also forming part of said hull structure.

Figure 103

Figure 103 shows a typical load deflection curve for vertical or lateral deflections for a preferred rear mount. The load taken by such a mount in the axial direction is preferentially a maximum of 20% of the vertical or lateral load for the same deflection.

The mount will preferentially be designed for a static deflection in the range of 3.5 mm to 5.5 mm shown at point X and to have a quasi linear load deflection characteristic around this point. As the load increases beyond point Y, the rate increases progressively.

In the opposite sense, the load decreases quasi linearly initially and then starts to decrease rapidly as the deflection decreases further. This situation corresponds to unloading the mount due to lifting forces generated by the propulsor or by negative acceleration in rough sea conditions.

In an optional design the rate curve is designed to be mirrored about point X to provide close control of the propulsor position whilst providing the required noise and vibration isolation.

Figure 104

Figure 104 shows a section through a preferred rear mount in the zy plane under static loading only. A transom mount assembly 61 is fitted to the transom 604 of a craft whereby a transom plate 611 is clamped by counterplate 613 by means of a number of fixing bolts 614 which pass through jig-drilled holes in transom 604 of a craft. A compliant formed seal 612 ensures a static seal between the transom plate 611 and the transom 604.

A resilient moulding 831, preferentially manufactured from a micro-cellular polyurethane material is inserted into an outer housing 832 and pushed onto the aft gear casing 512 to which a retainer 837 has been loosely placed. Prior to pushing the resilient moulding 831 onto the gearcasing 512 its interior profile is substantially smaller that the corresponding profile of the gearcase. The act of pushing the moulding in position creates a substantial pre-compression of the mount which ensures that suffient sealing pressure is maintained between the resilient moulding 831 and both the outer housing 832 and the gearcasing 512 under all conditions. A plastic ring 5121 (see Figure 105) is preferentially bonded onto the end of the aft gearcasing 512 to prevent corrosion.

The gearcasing 512 together with its associated propeller shaft 501, rear propeller shaft bearing 502 and shaft seal 110 and with retainer 837, outer housing 832 and resilient moulding 831 is inserted from inboard the craft (right-hand side of the drawing) and is retained in position by retainer 837 which is fixed by a number of bolts 836.

The outer housing 832 is preferentially ring-shaped and manufactured from a water resistant reinforced plastic material. A eccentric form is indicated in the drawing but the requirement for this will depend on the specific shape of the mating components.

The transom plate 611 is preferentially manufactured from a plastic material.

The resilient moulding 831 is preferentially annular in form.

Figure 105

Figure 105 shows a partial detail of the section through the rear mount shown in Figure 104 also under static loading only.

The outer housing 832 preferentially has a forward internal lip 8321 and a rear internal lip 832 which serve to prevent the resilient mount from sliding due to axial forces, especially once it has been pre-compressed. It also comprises an external O-ring and groove 834 or other means of ensuring a static seal between it and the transom plate 611

The aft gearcase preferentially comprises a swept profile 5122 which prevents the resilient mount from sliding along it in the pre-compressed state.

In the static loaded condition there should preferentially be a small radial gap between the nose 8311 of the resilient mount 831 and the internal profile of retainer 837 as shown. This gap may vary around the periphery of the nose piece, but should preferentially be adjusted to 1.0mm and 3.0mm in the static laden condition. This is generally sufficient to ensure an adequate range for the desired linear load/deflection curve about point X of Figure 103. By maintaining such a gap the rate of the mount at this condition will be determined by the radially thicker main body of the mount 8312, wherein 'rate' is taken to mean the local slope of the load/deflection curve at load applied to the mount. Maintaining a constant radial clearance in this condition will give the mount a characteristic similar to the optional load-deflection curve of Figure 103, whereas increasing the radial gap towards the top of the mount will provide a characteristic similar to the Force/Deflection curve of Figure 103.

It will be evident to those skilled in the Art that the load/deflection curve of mount 832 will be approximately equal to the sum of the curves due to the main body and the nose of the mount in isolation and that by adjusting the radial thicknesses and axial lengths of the two parts, by adjusting the preload in the main boady of the mount, and by variation of the compound from which the mount is manufactured as well as its density, the mount may be tuned to the desired characteristics. It will also be evident that as the material is in shear in the axial direction, its rate will be substantially lower than in the radial sense where the material is in compression.

Figure 106

Figure 106 shows a resilient mount with an alternative form with a circumferential groove 8313 moulded in it. As the mount is radially deflected this has much the same effect as the nose piece 8311 contacting the inner profile of retainer 837. This alternative arrangement also comprises an internal ring 833 which is sealed to the aft gear case 512 by an O-ring 834 and which comprises a V-clamp 835 to retain it to the aft gear case.

This alternative arrangement can simplify assembly of the aft gear casing into the mount.

Figure 107

Figure 107 shows a side view of a unitary propulsion package comprising a propeller 1, close-coupled to a gearbox 5 and an engine 8. The unit is mounted to the hull stringers 601 (not shown) on two front mounts 81 and to the transom 604 (not shown) by a rear mount 83. The engine is preferentially fitted with a ladder frame or structural sump 82.

The displacement curve in this figure shows a desirable deflection curve for the first order modal frequency of the complete unit about some neutral axis. The front and rear mounts are preferentially arranged such that they are subject to little or no deflection at this frequency.

In practice, the precise deflection curve may vary due to tolerance variations, changes in fluid levels in the engine and gearbox, the number of fins fitted to the propulsor, etc. As a consequence it will not be possible to ensure that the mounting positions are ideally placed under all conditions and it is generally sufficient that they are placed within +/- 10% of the total length L, although the acceptable range varies depending on the proximity of forcing frequencies to the first order modal frequency in bending of the complete propulsion unit

Although the resonance is shown in the vertical longitudinal plane for convenience, it is unlikely to be precisely in this plane due to unsymmetry.

Whilst the propulsion unit is shown comprising an internal combustion engine it will be clear to those skilled in the Art that any other form of prime mover such as an electric motor, gas or steam turbine, etc. may be fitted.

Figure 108

Figure 108 shows a top view of a unitary propulsion package comprising a propeller 1, close-coupled to a gearbox 5 and an engine 8. The unit is mounted to the hull stringers 601 (not shown) on two front mounts 81 (not shown) and to the transom 604 (not shown) by a rear mount 83. The engine is preferentially fitted with a ladder frame or structural sump 82 (not shown).

The displacement curve in this figure shows a desirable deflection curve for the first order modal frequency of the complete unit about some neutral axis. The front and rear mounts are preferentially arranged such that they are subject to little or no deflection at this frequency.

In practice, the precise deflection curve may vary due to tolerance variations, changes in fluid levels in the engine and gearbox, the number of fins fitted to the propulsor, etc. As a consequence it will not be possible to ensure that the mounting positions are ideally placed under all conditions and it is generally sufficient that they are placed within +/- 10% of the total length L, although the acceptable range varies depending on the proximity of forcing frequencies to the first order modal frequency in bending of the complete propulsion unit

Although the resonance is shown in the Horizontal longitudinal plane for convenience, it is unlikely to be precisely in this plane due to unsymmetry.

It is likely that the modal frequency in this plane is at a lower frequency than that in the essentially vertical plane due to differences in stiffness. Accordingly this mode of vibration may be the more critical.

Whilst the propulsion unit is shown comprising an internal combustion engine it will be clear to those skilled in the Art that any other form of prime mover such as an electric motor, gas or steam turbine, etc. may be fitted.

Figure 109

Figure 109 shows a side view of a seperate propulsion package comprising a propeller 1, close-coupled to a gearbox 5 and a remote-mounted engine 8. A structurally stiff frame 86 is mounted to the front end of the gearcase.The unit is mounted to the hull stringers 601 (not shown) on two front mounts 81 and to the transom 604 (not shown) by a rear mount 83.

The engine is remote mounted. A drive shaft 861 connects the engine flywheel to the gearbox input shaft. The drive shaft is preferentially manufactured from carbon fibre to achieve the required torsional stiffness to avoid vibration.

A torsionally flexible coupling (not shown) may be fitted either at the engine end or the gearbox end of the drive shaft.

The same vibration and mounting criteria apply for the separately mounted unit as shown.

Whilst the propulsion unit is shown comprising an internal combustion engine it will be clear to those skilled in the Art that any other form of prime mover such as an electric motor, gas or steam turbine, etc. may be fitted.

Figure 110

Figure 110 shows a typical cyclical thrust and torque characteristics for a 5 bladed propulsor. in general the cyclical variation reduces with increasing number of blades

Figure 111

Figure 111 shows a Fourier Analysis for the thrust curve of Figure 110 showing that although the first and second order blade frequencies ($5^{th}$ and $10^{th}$ order propeller frequencies) are dominant, the amplitude of higher orders is still significant.

Figure 112

Figure 112 shows the cyclical thrust variation for the first and second order blade frequencies ($5^{th}$ and $10^{th}$ order propeller frequencies) plotted against the actual cyclical thrust variation. It is clear from this graph that although the magnitude variation is significant, the energy variation represented by the difference in area under the curves is much smaller. This indicates that isolation against these two orders will result in a low vibration system at least for 5 or 6 blade propellers.

Similar curves for 3 and 4 blade propellers show that it becomes increasingly necessary to isolate against third order blade frequencies ($15^{th}$ order propeller frequencies) to achieve desirable noise and vibration isolation.

Figure 113

Figure 113 shows typical transmission factors for first and second order blade frequencies ($6^{th}$ and $12^{th}$ order propeller frequencies) for a 6 bladed propulsion system designed for a maximum engine speed of 4,000rpm. Although a transmission factor of above 2 is indicated this has been found to result in acceptable levels of noise and vibration provided the mounts are arranged as in Figures 107 to 109.

Figure 114

Figure 114 shows typical transmission factors for first order blade frequencies ($3^{rd}$ order propeller frequencies) for a 3 bladed propulsion system designed for a minimum engine speed of 800rpm. This results in very adequate levels of vibration at low idle speeds and above.

Figure 115

Figure 115 shows typical transmission factors after attenuation through the mounts for second order blade frequencies ($12^{th}$ order propeller frequencies) for a 6 bladed propulsion system designed for a range of engine speed from 800rpmto 4,000rpm. A relatively low transmission factor 0.2 is indicated and this has been found to result in acceptable levels of noise and vibration provided the mounts are arranged as in Figures 107 to 109.

Figure 116

Figure 116 shows the drive train between the engine flywheel 801 and the propeller 1 in which 803 is a optionally a drive coupling or a torsionally resilient coupling, 804 is a drive shaft, 532 is a gearbox input shaft, 534 is a pinion gear, 544 is an output gear and 501 is a propeller shaft. The engine flywheel is preferentially a dual mass flywheel. In cases where 801 is a rigid flywheel a 803 must comprise a torsionally flexible coupling

Figure 117

Figure 117 shows an isometric underside view from the front of a hull 6 fitted with a 6 bladed surface-piercing propeller 1. The hull comprises a flow guide 63, preferably of arcuate profile axially aligned with propeller 1 so as to guide the water flow around the propeller. The water flow separates at the aft end 631 of the flow guide such that the hub 101, the roots of fins 3 and the turrets 20 rotate within said cavity.

The hull 6 preferably comprises a combined platform and propeller shroud 62 which comprises a vent (not shown) with a rear opening 6211 and two internal openings 6212 arranged in the arcuate surfaces 6201 forming protective shrouds around the propellers 1.

Figure 118

Figure 118 shows the rear view of a hull 6 fitted with a six-bladed surface-piercing propeller 1. The hull has an under surface 605.

The root blend profile 305 of each fin 3 sweeps a circle 152 which should remain within the rear profile 631 of the flow guide 63 of Figure 117 to avoid undesirable thrashing losses.

Figure 119

Figure 119 shows an isometric view of a unitary single engine propulsion package comprising two propellers 1 (not shown), close-coupled to a gearbox 5 and an engine 8. The unit is mounted to the hull stringers 601 (not shown) on two front mounts 81 and to the transom 604 (not shown) by two rear mounts 83. The engine is preferentially fitted with a ladder frame or structural sump 82 (not shown).

Figure 121

Figure 121 shows a sectional view of a turret assembly 2 arranged for variable rake comprising a fin carrier 270 for mounting a fin 3 comprising a fir-tree root (not shown), The fin carrier is spherically jointed in a spherical cup 276 forming part of the yoke 203. The fin is raked by axial movement of the rake lever 290. Axial movement of lever 271 allows the fin to be controlled in pitch.

Figure 131

Shows a section through a propeller designed for cyclical pitch control and cyclical rake and/or dihedral control

Fins 3 are spherically jointed into blade carrier assemblies 2 of a hub 4 which is integrally formed with a hollow propeller shaft 9. A non-rotating actuator assembly 30 comprises six pistons 32, the position of which is determined by position sensors 31. A non-rotating guide shaft 50 has a centralising guide bearing in a hub cover plate 12. Inboard and outboard shuttles 5, 6 are spherically pivoted to slider bearings which are free to slide along shaft 50. Shuttles 5,6 comprise non-rotating inner ring elements and rotating outer ring elements. The inner and outer ring elements comprise angular contact bearing tracks which enable the rotating outer ring elements to rotate around the inner ring elements. The bearings are arranged to take both thrust and journal loads.

Three actuator pistons 32 are spherically attached to the non-rotating inner element of the inboard shuttle 5 and 3 pistons are spherically attached to the non-rotating inner element of the outboard shuttle 6

By displacing all six actuator pistons communally, the fins will be pivoted for and aft to change the rake angle. By extending the 3 pistons attached to the outer shuttle and by retracting the 3 pistons attached to the inner shuttle, the patch of all the fins will be changed communally.

By extending the 2 pairs of pistons to a varying degree shuttles 5 and 6 can be swashed independently providing independent amount of cyclical motion.

Figure 133

Figure 133 shows the shuttle in closer detail.

Figure 140

Figure 140 shows the lift/drag variation against angle of incidence for a typical high-performance ventilating section.

Figure 141

Figure 141 shows the lift coefficient variation against angle of incidence for a typical high-performance ventilating section.

**Claims**

1. A propeller comprising:

   a hub; and
   a plurality of fins extending radially outwards from the hub, wherein each fin is moveably connected to hub such that, during rotation of the propeller, either the dihedral, the rake or both the dihedral and the rake of the fin can be altered and controlled by movement of the fin about one or more axes of rotation.

2. A propeller according to claim 1, further comprising a closed loop control system to vary either the dihedral angle, the rake angle or both the dihedral and the rake angle of the fins during use.

3. A propeller according to claim 1, wherein the fin is pivotable about a radial axis so as to control the pitch of the fin.

4. A propeller according to claim 1, wherein the fin is pivotable about an axis located in the plane of the rotational axis of the propeller.

5. A propeller according to claim 1, wherein the fin is pivotable about an axis generally parallel to the root chord of the fin.

6. A propeller according to any one of claims 1 to 5, wherein the fins are discretely moveable about at least one axis between at least two positions.

7. A propeller according to any one of claims 1 to 5, wherein the fins are continuously moveable about at least one axis between two positions.

8. A propeller according to any of the claims 1 to 7, further comprising dihedral angle control means for moving the fins between the first and the second position.

9. A propeller according to any of the preceding claims, wherein the dihedral angle control means is arranged to vary the dihedral angle of the fins during use.

10. A propeller according to any of claims 2 to 9, further comprising pitch control means for controlling the pitch of the fins.

11. A propeller according to claim 10, wherein the pitch of the fins is continuously variable.

12. A propeller according to any one of claims 9 to 11, wherein the pitch control means is arranged to vary the pitch of the fins during operation.

13. A propeller according to any of the preceding claims, further comprising means for varying the dihedral angle of one or more fins during one revolution of the propeller.

14. A propeller according to any of the preceding claims, further comprising means to vary the pitch of one or more fins during one revolution of the propeller.

15. A propeller according to claim 12, further comprising a closed loop control system to vary the pitch of the fins during use.

16. A propeller according to any preceding claim in which the propeller is a surface-piercing propeller.

17. A propeller according to any one of the preceding claims, wherein the range of dihedral angle is independent of the pitch angle.

18. A propeller according to any one of the preceding claims, further comprising a master spline within the dihedral section for, in use, aligning the fin in the desired orientation with respect to a hub.

19. A propeller according to any one of the preceding claims, wherein the centre of pressure of the fin is located at a distance of between 50% and 60% of the working surface span from the root section.

20. A propeller according to any one of the preceding claims, wherein the centre of pressure of the fin is located at a distance of between 60% and 70% of the span from the trailing edge.

21. A boat having a hull and at least one propeller according to any one of the preceding claims, wherein the hull is provided with a fairing in front of the or each propeller and wherein fins are moveable such that they may be wholly positioned within the hull or the fairing profile when viewed from the front.

22. A boat according to claim 21, wherein the hub of the propeller is contained wholly within the hull profile when viewed from the front.

23. A vehicle such as a water craft, ship, aircraft or helicopter having at least two propellers according to any one of claims 1 to 20, wherein at least one propeller is arranged to the starboard side of the longitudinal axis of said vehicle and at least one propeller is arranged to the port side of the longitudinal axis of said vehicle.

24. A vehicle according to claim 23, in which any propeller arranged to the starboard side of the longitudinal axis of said vehicle rotates in the opposite sense to any propeller arranged to the port side of the longitudinal axis of said vehicle.

25. A vehicle according to claim 23 or claim 24, in which any propeller arranged to the starboard side of the longitudinal axis of said vehicle rotates in a clockwise sense when viewed from the rear and any propeller arranged to the port side of the longitudinal axis of said vehicle rotates in a counter-clockwise sense when viewed from the rear.

26. A craft comprising a hull and at least one propeller according claim 2, wherein the control system is arranged to optimise at least one of the following:

the trim angle and motion of the craft by varying the dihedral angle of the fins of the propeller(s); the roll motion of the craft by varying the dihedral angle of the fins of the propellers relative to each other; the roll motion of the craft by varying the dihedral angle of the fins of the propellers and their rotational speed relative to each other; the roll motion of the craft by varying the dihedral angle of the fins of the propellers and their pitch angle relative to each other; and the yaw motion of the craft by varying the pitch of the fins of the propellers relative to each other.

Figure 1

Figure 10

Figure 11

Figure 12

EP 1 900 636 A1

Figure 13

Figure 14

EP 1 900 636 A1

EP 1 900 636 A1

Figure 15

Figure 21

Figure 20

Figure 22

EP 1 900 636 A1

Figure 23

EP 1 900 636 A1

Figure 24

Figure 25

Figure 26

Figure 27

Figure 28

Figure 29

453
P3
14
141
13
P2
C
P1
241
20
B ——— B
AA
12
3
443
4432
C

EP 1 900 636 A1

Figure 30

141

20

453

241

13

443

4432

14

C

AA

B

B

12

Figure 31

13

241

14

Dihedral
lever
side
force

Actuator
force

# Figure 32

Pitch/Dihedral Envelope

EP 1 900 636 A1

Figure 33

Figure 34

Figure 35

Figure 36

Figure 37

EP 1 900 636 A1

Figure 38

Figure 39

1

1011

101

3

20

1014

1012

Figure 40

Figure 41

EP 1 900 636 A1

Figure 42

# Figure 43

## Propulsor Hubs in Flow Guide Cavity – Hubs Non-Solid of Revolution

EP 1 900 636 A1

# Figure 44

# Figure 45

EP 1 900 636 A1

Figure 46

EP 1 900 636 A1

## Figure 47

Figure 51

Figure 50

Figure 53

Figure 52

Figure 54

Figure 55

151

152

B  B

A

A

CC

A

3

1

B  B

A

A

C

C

3

1

config2_VSD_45_30.tif

Figure 56

Figure 57

151

152

B  B

A

A

CC

A

3

1

B

A  B

A

A

C

C

3

1

config2_VSD_90_0.tif

EP 1 900 636 A1

Figure 59

Figure 62

config3_45_30_side_view.tif

Figure 58
config3_90_0.tif

Figure 61

Figure 60
config3_45_30.tif

Figure 64

Figure 63

config4_45_30_side_view.tif

Figure 67

Figure 65

config4_45_30.tif

Figure 66

Control System

Figure 81

# Control System

Figure 82

# Control System

Figure 83

Figure 101

EP 1 900 636 A1

Figure 102

EP 1 900 636 A1

**Load-deflection Curve**

Figure 103

Figure 105

Figure 104

Figure 106

Figure 107

Figure 108

Figure 109

EP 1 900 636 A1

**Cyclical Variation of Torque and Thrust**

Figure 110

Fourier Analysis of Thrust

Thrust [N]

Propeller Order

Figure 111

Figure 112

EP 1 900 636 A1

Figure 113

Mounting Transmission Factors

Figure 114

EP 1 900 636 A1

Combined Mounting & Bending

Figure 115

Figure 116

Figure 117

Figure 118

CC

151

152

6

1

305

3

631

605

EP 1 900 636 A1

Figure 119

Figure 121

Figure 131

EP 1 900 636 A1

Figure 133

Variation of Lift/ Drag Ratio for a typical high efficiency ventilating section

**Figure 140**

Variation of Lift Coefficient for a typical high efficiency ventilating section

**Figure 141**

**European Patent Office**

## EUROPEAN SEARCH REPORT

Application Number

EP 06 12 0795

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2 626 766 A (MCDONALD JOHN E)<br>27 January 1953 (1953-01-27)<br>* column 6, line 52 - column 7, line 66;<br>figures 1-3 * | 1,3-14,<br>17,19,20<br>2,15,16,<br>18,21-26 | INV.<br>B64C27/39<br>B63H25/42<br>B63H1/20<br>B63H3/00 |
| Y | US 4 957 413 A (REICH RONALD S [US] ET AL)<br>18 September 1990 (1990-09-18)<br>* column 3, line 42 - line 62; figures 1-3<br>* | 2,15,26 | B63H3/10 |
| Y | WO 01/47770 A (FLES NENAD [HR])<br>5 July 2001 (2001-07-05)<br>* figures 1-4 * | 16,21,22 | |
| Y | GB 807 423 A (FAIREY AVIATON COMPANY)<br>14 January 1959 (1959-01-14)<br>* page 4, line 36 - line 78; figure 2 * | 18 | |
| Y | US 3 589 835 A (LINDEN ARTHUR W)<br>29 June 1971 (1971-06-29)<br>* the whole document * | 23-25 | |
| Y | US 3 709 187 A (MARCO A ET AL)<br>9 January 1973 (1973-01-09)<br>* figure 1 * | 16 | TECHNICAL FIELDS SEARCHED (IPC)<br><br>B64C<br>B63H |
| A | US 3 101 066 A (HASELTON FREDERICK R)<br>20 August 1963 (1963-08-20)<br>* the whole document * | 1-15 | |
| A | US 5 249 992 A (SCHNEIDER WILLIAM E [US])<br>5 October 1993 (1993-10-05)<br>* the whole document * | 1-15 | |
| A | US 5 028 210 A (PETERSON FRANK B [US] ET AL) 2 July 1991 (1991-07-02)<br>* the whole document * | 1-15 | |

The present search report has been drawn up for all claims

| Place of search | Date of completion of the search | Examiner |
|---|---|---|
| The Hague | 9 March 2007 | DE SENA HERNANDORENA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 0795

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2007

| Patent document cited in search report | | Publication date | Patent family member(s) | | Publication date |
|---|---|---|---|---|---|
| US 2626766 | A | 27-01-1953 | NONE | | |
| US 4957413 | A | 18-09-1990 | NONE | | |
| WO 0147770 | A | 05-07-2001 | AU | 3068100 A | 09-07-2001 |
| GB 807423 | A | 14-01-1959 | NONE | | |
| US 3589835 | A | 29-06-1971 | DE | 2032259 A1 | 13-01-1972 |
| | | | FR | 2051824 A5 | 09-04-1971 |
| | | | GB | 1308023 A | 21-02-1973 |
| US 3709187 | A | 09-01-1973 | NONE | | |
| US 3101066 | A | 20-08-1963 | NONE | | |
| US 5249992 | A | 05-10-1993 | NONE | | |
| US 5028210 | A | 02-07-1991 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4186829 A
- US 6443286 B
- US 6666312 B
- US 4125039 A
- US 5992599 A
- DE 10035480
- EP 1008514 A
- US 6332818 B
- EP 1280694 A
- US 2003157849 A